# EUROPEAN PATENT SPECIFICATION

(11) **EP 4 027 841 B1**
(45) Date of publication and mention of the grant of the patent: **08.01.2025**
(21) Application number: 20862394.2
(22) Date of filing: 20.04.2020
(51) Int. Cl.: A47J 27/00, A47J 36/06, A47J 27/086

(54) **COOKING DEVICE**
KOCHVORRICHTUNG
DISPOSITIF DE CUISSON

(30) Priority: 12.09.2019 CN 201921530522 U; 12.09.2019 CN 201910866385
(43) Date of publication of application: 20.07.2022
(73) Proprietor: Zhejiang Shaoxing Supor Domestic Electrical Appliance Co., Ltd., Shaoxing, Zhejiang 312017 (CN)
(72) Inventor: LI, Jinzhou, Shaoxing, Zhejiang 312017 (CN); LI, Jian, Shaoxing, Zhejiang 312017 (CN); HE, Guoying, Shaoxing, Zhejiang 312017 (CN)
(74) Representative: LLR
(86) International application number: PCT/CN2020/085532
(87) International publication number: WO 2021/047174

(56) References cited:
- EP-A2- 2 762 044
- CN-A- 104 490 286
- CN-A- 104 706 200
- CN-A- 107 581 892
- CN-A- 109 464 000
- CN-U- 203 576 313
- CN-U- 204 561 804
- CN-U- 208 510 658
- US-A1- 2005 051 157
- US-A1- 2019 069 706

## Description

### Field of the Invention

The invention relates to the technical field of electrical home appliances, and in particular, relates to a cooking device.

### Background of the Invention

In existing pressure-baking cookers, a baking assembly is provided on the cover and radiates heat from the cover towards the cooker body. When the baking assembly is being heated, heat is also radiated upwards towards a cover body, wherein numerous plastic parts are located and susceptible to be affected, creating safety risks.

In other words, a technical problem resides in the fact that plastic parts inside the cover body of an existing cooking device are greatly affected by temperature.

### Summary of the Invention

A main objective of the invention is to provide a cooking device, to solve the problem that plastic parts inside the cover body of existing cooking devices are greatly affected by temperature.

To achieve this objective, according to one aspect of the invention, it is provided a cooking device according to claim 1.

By equipping the cover with both the baking assembly and the inner cover, the cooking device can perform cooking by both baking and boiling. As the inner cover is detachably arranged below the baking assembly, when the cooking device is needed to perform cooking by baking, the inner cover is detached, so as to use the baking assembly to bake food materials inside the device body. When the cooking device is needed to perform cooking by boiling, the inner cover is mounted below the baking assembly, so as to achieve conventional cooking. The sealing structure seals the gap between the venting assembly and the venting passage and prevents air from entering inside the cover, so as to reduce the impact of humid air on parts inside the cover and to ensure the working reliability of the cover. The sealing structure can also well insulate heat transmission between the baking assembly and the cover body, so as to reduce the impact of heat on parts inside the cover body and protect the cover body, therefore improving the reliability of the functioning of the cover body.

Further, the baking assembly is provided with a through hole that is in communication with the venting passage and through which the venting assembly passes, the sealing structure seals the gap between the cover body and the baking assembly. The sealing structure can reduce air entering between the baking assembly and the cover body, thereby reducing the impact of humid air on structural elements of the baking assembly and improving the reliability of the functioning of the baking assembly. The sealing structure not only seals the gap between the baking assembly and the cover body, but also seals the venting assembly and the venting passage.

Further, the sealing structure is clamped between the cover body and the baking assembly, and the venting assembly passes through the sealing structure and is tight fitted with the sealing structure. With the sealing structure clamped between the cover body and the baking assembly, the gap between the baking assembly and the cover body can be sealed, thereby preventing air from entering into the gap between the cover body and the baking assembly. In addition, the sealing structure can also form a support to the cover body, so that the baking assembly is reliably connected with the cover body.

Further, the cover body comprises an outer cover and an inner liner arranged below the outer cover, and the sealing structure seals the gap between the baking assembly and the outer cover or the inner liner. This disposition can reduce air entering the space inside the cover body, thereby avoiding the impact of humid air on parts inside the cover body, and improving the reliability of the functioning of parts inside the cover body.

Further, the venting assembly is provided with a mounting slot inside which at least a part of the sealing structure is clamped, and the sealing structure is detachable together with the inner cover. Since the sealing structure is detached together with the inner cover, when the cooking device performs cooking by baking, the high temperature produced by the baking assembly will not affect the sealing structure, thus improving the reliability of the functioning of the sealing structure.

Further, the venting assembly comprises a pressure limiting valve seat and an opening disabling valve seat, the sealing structure can be an integral component or comprises two separate sealing rings for each of the valve seats.

Further, the orthographic projection of the heating element on the heat shield does not coincide with the orthographic projection of the sealing structure on the heat shield. This disposition can increase the time needed for heat radiated by the heating element to be transmitted to the sealing structure, reduce the temperature transmitted to the sealing structure and thus lengthen the service life of the sealing structure.

Further, the sealing structure is located above the heating element. This disposition can reduce heat transmission, prevent the sealing structure from being directly contacted by high temperature, and thus improve the reliability of the functioning of the sealing structure.

Further, the sealing structure has a body section that is clamped between the cover body and the baking assembly and a sealing section extending from an inner periphery of the body section and tight fitted with the venting assembly. The body section is clamped between the cover body and the baking assembly, so as to seal the gap between the cover body and the baking assembly. The sealing section is tight fitted with the venting assembly, so as to seal the gap between the venting assembly and the cover body and/or the baking assembly.

Further, the sealing structure further has a first bending section located on top of the body section and a second bending section located at the bottom of the body section, the bending direction of the first bending section is opposite to that of the second bending section, the upper surface of the first bending section abuts against the lower surface of the cover body, and the lower surface of the second bending section abuts against the upper surface of the baking assembly. The upper surface of the first bending section abuts against the lower surface of the cover body, so that the sealing structure and the cover body are connected in a gapless manner to achieve the sealing. Air is thus prevented from entering the gap between the cover body and the baking assembly through the gap between the sealing structure and the cover body. The lower surface of the second bending section abuts against the upper surface of the baking assembly, so that the sealing structure and the baking assembly are connected in a gapless manner to achieve the sealing.

Further, the one among the first bending section and the second bending section that bends towards the venting assembly is the sealing section, which is interference fitted with the venting assembly, so as to prevent steam from entering the space between the cover body and the baking assembly. The sealing section can seal the gap between the cover body and the venting assembly, and prevent air from flowing back into the space between the cover body and the baking assembly.

Further, the venting assembly is provided with a mounting flange, and the sealing section is provided with an overlapping flange extending towards the venting assembly that overlaps with the mounting flange and is interference fitted with the venting assembly. The fitting between the mounting flange and the overlapping flange renders the connection between the sealing structure and the venting assembly tighter, makes it difficult to detach the sealing structure from the venting assembly, and can also improve the sealing effect of the sealing structure.

Further, the heat shield comprises a plurality of reflecting shells that are sequentially stacked, and the sealing structure seals the gaps between the plurality of reflecting shells. This disposition can effectively cool the hot air, so as to ensure that heat will be reduced when the hot air is transmitted to the cover body and will not affect the cover body. By providing heat barrier gap, the temperature transmitted to the cover body can be lowered, improving the reliability of the functioning of the cover body.

Further, the sealing structure has a cooperating section extending downward from a body part of the sealing structure so as to seal the gap between two adjacent reflecting shells. This disposition allows one sealing structure to seal the gaps between a plurality of parts, thereby reduces the number of sealing elements, as well as the assembly cost and difficulty.

Further, the cooperating section has a clamping section extending away from the venting assembly, at least one reflecting shell extending into a slot formed between the clamping section and the body section, the clamping section extending into the gap between two adjacent reflecting shells and pressed against the reflecting shells so as to seal the gap between two adjacent reflecting shells. This disposition reduces humid air entering between two reflecting shells, and avoids the impact of humid air on structural elements between the reflecting shells.

Further, the baking assembly further comprises a support member by which two adjacent reflecting shells are connected. An air barrier is formed between two adjacent reflecting shells thanks to the support member, so as to reduce heat transmitted to the reflecting shell close to the cover body and heat transmitted to the cover body, so that the cover body may function reliably.

Further, the support member has a position limiting hole for pressure limiting valve seat and a position limiting hole for opening disabling valve seat, which respectively lets through the pressure limiting valve seat and the opening disabling valve seat. The position limiting hole for pressure limiting valve seat has a first annular flange extending towards the pressure limiting valve seat, and the position limiting hole for opening disabling valve seat has a second annular flange extending towards the opening disabling valve seat. The first annular flange and the second annular flange are provided to prevent the pressure limiting valve seat and the opening disabling valve seat from swaying, and thereby improve the reliability of the functioning of the pressure limiting valve seat and the opening disabling valve seat.

Further, the sealing structure has a body part and a plurality of position limiting feet extending from the body part towards the cover body and cooperating with the cover body in a position limiting manner, the position limiting feet being arranged along the circumference of the sealing structure. The position limiting feet are connected with the cover body, so as to prevent the sealing structure from detaching from the cover body, and improve the tightness of the connection between the sealing structure and the cover body.

Further, the body part has an extension hole for pressure limiting valve seat and an extension hole for opening disabling valve seat, the pressure limiting valve seat on the inner cover passes through the extension hole for pressure limiting valve seat to be connected with the pressure limiting valve, the opening disabling valve seat on the inner cover passes through the extension hole for opening disabling valve seat to be connected with the opening disabling valve. The sealing structure seals the gap between the pressure limiting valve seat and the through hole, as well as the gap between the opening disabling valve seat and the through hole, so as to reduce heat transmitted to the cover body, and prevent hot air from affecting parts inside the cover body.

Further, the body part has a first circumferential abutting flange surrounding the pressure limiting valve seat extension hole, and a second circumferential abutting flange surrounding the opening disabling valve seat extension hole. The first circumferential abutting flange and the second circumferential abutting flange abut against the cover body, so that the sealing structure reliably seals the through hole.

Further, at least a part of the first circumferential abutting flange extends along a boundary of the body part; and/or at least a part of the second circumferential abutting flange extends along a boundary of the body part; and/or the parts of the first circumferential abutting flange and the second circumferential abutting flange that are near each other are spaced apart from each other, so as to form a deformation gap between them. The deformation gap also makes it difficult to detach the sealing structure from the pressure limiting valve seat and the opening disabling valve seat, improving the reliability of the sealing structure.

Further, the inner liner may comprise an abutting cylinder extending towards the outer cover and tight fitted with an abutting rib arranged on the outer cover, so asto seal the gap between the outer cover and the inner liner. Preferably the abutting rib also cooperates sealingly with the sealing structure.

Further, the heat shield or the cover body may comprise a sealing cylinder, so as to seal the gap between the cover body and the baking assembly. These additional sealing elements may improve the tightness between the parts.

### Description of the Drawings

The accompanying drawings of the specification, which form part of the application, are presented for further understanding of the invention. The illustrative embodiments of the invention and their description help to explain the invention, and do not constitute an undue limitation of the invention. In the accompanying drawings:
Figure 1 shows a schematic structural view of the cover of a cooking device of a first embodiment of the invention;
Figure 2 shows a view from one angle of the cover of Figure 1, without the inner cover;
Figure 3 shows a view from another angle of cover of Figure 1, without the inner cover;
Figure 4 shows an exploded view of Figure 1;
Figure 5 shows a view from one angle of the support member of Figure 4;
Figure 6 shows a view from another angle of the support member of Figure 4;
Figure 7 shows a view from yet another angle of the support member of Figure 4;
Figure 8 shows a view from one angle of the sealing structure of Figure 4;
Figure 9 shows a view from another angle of the sealing structure of Figure 4;
Figure 10 shows a view from yet another angle of the sealing structure of Figure 4;
Figure 11 shows an enlarged view of the portion T of Figure 1;
Figure 12 shows an enlarged view of the portion J of Figure 2;
Figure 13 shows a schematic view of the position relationship between the sealing structure, the cover body and the baking assembly of a second embodiment of the invention;
Figure 14 shows a schematic structural view of the cover of the cooking device of a fourth embodiment of the invention;
Figure 15 shows an exploded view of the cover of Figure 14;
Figure 16 shows an enlarged view of the portion P of Figure 14;
Figure 17 shows an enlarged view of the portion Q of Figure 16;
Figure 18 shows a schematic structural view of the cover of the cooking device of a fifth embodiment of the invention;
Figure 19 shows an enlarged view of the portion M of Figure 18;
Figure 20 shows a schematic structural view of the cover of the cooking device of a sixth embodiment of the invention;
Figure 21 shows an enlarged view of the portion N of Figure 20;
Figure 22 shows a schematic structural view of the cover of the cooking device of a seventh embodiment of the invention;
Figure 23 shows an enlarged view of the portion W of Figure 22;
Figure 24 shows a schematic structural view of the cover of the cooking device of an eighth embodiment of the invention;
Figure 25 shows an exploded view of the cover of Figure 24;
Figure 26 shows an enlarged view of the portion B of Figure 24;
Figure 27 shows a schematic structural view of the cover of the cooking device of a ninth embodiment of the invention;
Figure 28 shows an enlarged view of the portion K of Figure 27;
Figure 29 shows an enlarged view of the portion R of Figure 28;
Figure 30 shows a schematic structural view of the cover of the cooking device of a tenth embodiment of the invention;
Figure 31 shows a bottom view of the cover of Figure 30;
Figure 32 shows a view in perspective from one angle of the cover of Figure 30;
Figure 33 shows a schematic view of the cover of Figure 32, without the inner cover being mounted;
Figure 34 shows a view from one angle of the inner cover of Figure 32;
Figure 35 shows an exploded view from one angle of the cover of Figure 30;
Figure 36 shows an exploded view from another angle of the cover of Figure 30;
Figure 37 shows a schematic view of the position relation between the inner cover and the pressure limiting valve of Figure 36;
Figure 38 shows an exploded view from one angle of Figure 37;
Figure 39 shows an exploded view from another angle of Figure 37;
Figure 40 shows a schematic structural view of the baking assembly of Figure 35;
Figure 41 shows an exploded view of Figure 40;
Figure 42 shows a sectional view from one angle of the cover of Figure 30;
Figure 43 shows a sectional view from another angle of the cover of Figure 30;
Figure 44 shows a sectional view from yet another angle of the cover of Figure 30;
Figure 45 shows a view from one angle of the pressure limiting sealing ring of Figure 43;
Figure 46 shows a schematic view of the position relation between the pressure limiting sealing ring and the pressure limiting valve seat of Figure 43;
Figure 47 shows a view from another angle of the pressure limiting sealing ring of Figure 43;
Figure 48 shows a view from one angle of the opening disabling sealing ring of Figure 44;
Figure 49 shows a schematic view of the position relation between the opening disabling sealing ring and the opening disabling valve seat of Figure 44;
Figure 50 shows a view from another angle of the opening disabling sealing ring of Figure 44.

The above accompanying drawings include the following references:
10: cover; 30: cover body; 31: first plug terminal; 33: pressure limiting valve mounting hole; 34: opening disabling valve mounting hole; 35: outer cover; 351: venting hole; 352: abutting rib; 353: abutting face; 354: sealing rib; 36: inner liner; 361: abutting cylinder; 362: annular supporting rib; 363: supporting section; 364: annular protruding rib; 365: flanging section; 366: stepped face; 37: rotary bar; 40: baking assembly; 41: heating element; 44: heat shield; 441: first reflecting shell; 442: second reflecting shell; 444: through hole; 445: pressure limiting valve ceding hole; 446: first passing hole; 447: first sealing ring rib; 448: second passing hole; 449: second sealing ring rib; 48: support member; 481: position limiting hole for pressure limiting valve seat; 482: position limiting hole for opening disabling valve seat; 483: first annular flange; 484: second annular flange; 49: fixing clamp; 50: inner cover; 52: pressure limiting valve seat; 53: opening disabling valve seat; 54: venting assembly; 541: mounting flange; 80: fixing screw; 100: pressure limiting sealing ring; 101: ring body; 102: position limiting rib; 110: opening disabling sealing ring; 111: narrowed section; 120: pressure limiting valve; 130: sealing structure; 131: position limiting foot; 132: body part; 1321: cooperating section; 1322: clamping section; 133: extension hole for pressure limiting valve seat; 134: extension hole for opening disabling valve seat; 135: first circumferential abutting flange; 136: second circumferential abutting flange; 137: connecting section; 138: reinforcing section; 139: extension section; 140: handle; 150: steam cover; 160: heat insulating cotton; 170: rotary cover; 190: opening disabling valve; 201: body section; 202: sealing section; 203: guiding oblique face; 204: overlapping flange; 205: cooperating section; 206: clamping section; 207: abutting section; 208: mounting ring slot; 210: slot; 220: sealing element; 221: main section; 222: thinned section; 230: sealing cylinder.

### Detailed Description of the Utility Model

It should be noted that, when there is no conflict, the embodiments in the application and their features can be combined with each other. The invention will be described below in reference to the accompanying drawings and in connection with embodiments.

It should be noted that, unless otherwise specifically indicated, all technical and scientific terms used in the application have the same meanings as commonly understood by an ordinary person skilled in the art in the technical field to which the invention belongs.

In the application, unless otherwise indicated, directional terms used such as "upper," "lower," "top," and "bottom" generally refer to the directions shown in the accompanying drawings, or refer to the vertical or perpendicular direction of a part itself, or the direction of gravity. Similarly, to facilitate understanding and description, "inner" and "outer" refer to the inside and outside of the contour of the respective part itself. However, those directional terms are not used to limit the invention.

To solve the problem that the cover body of an existing cooking device is greatly affected by temperature, the invention provides a cooking device.

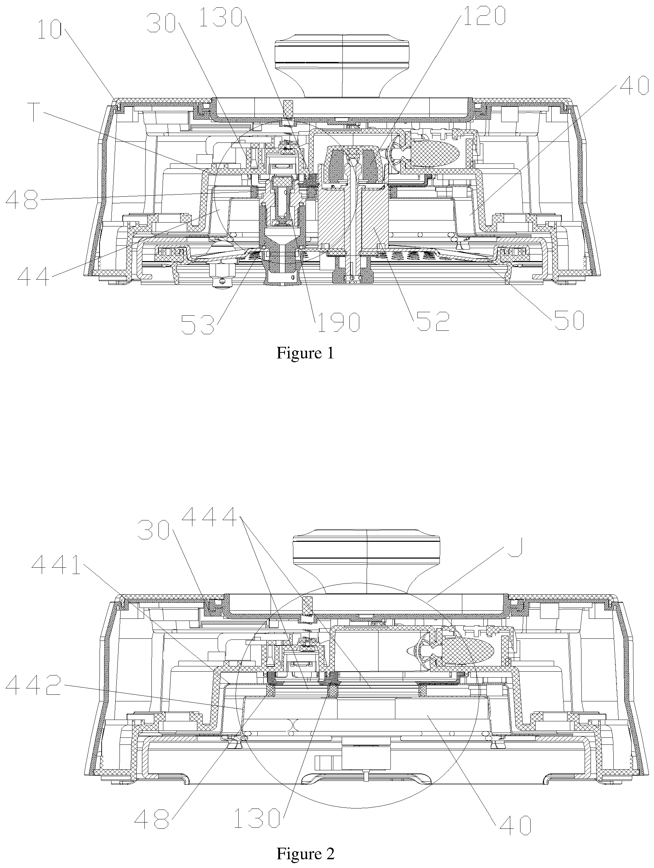

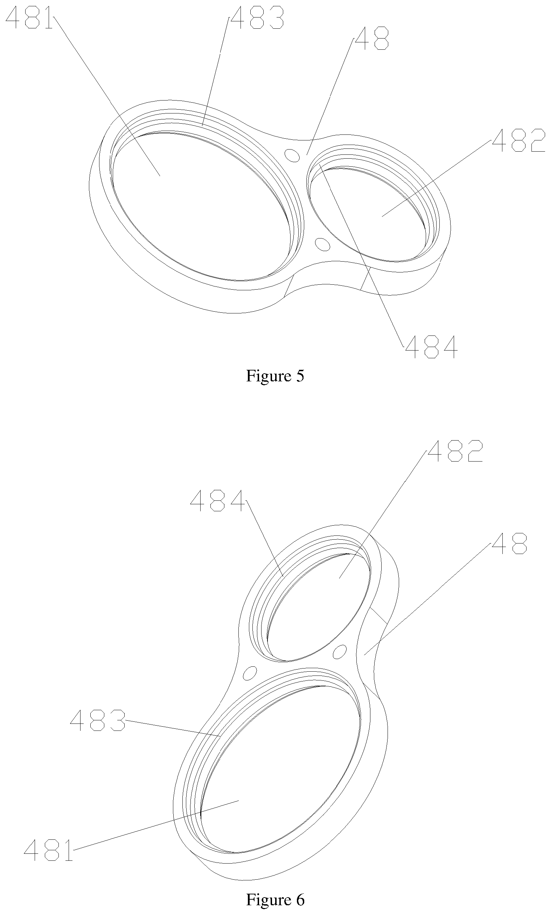

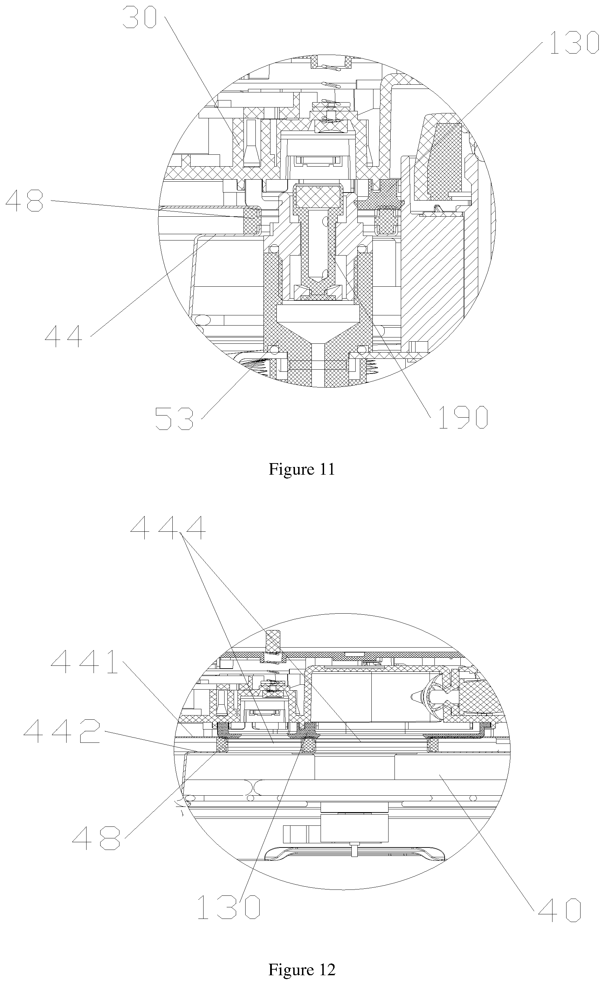

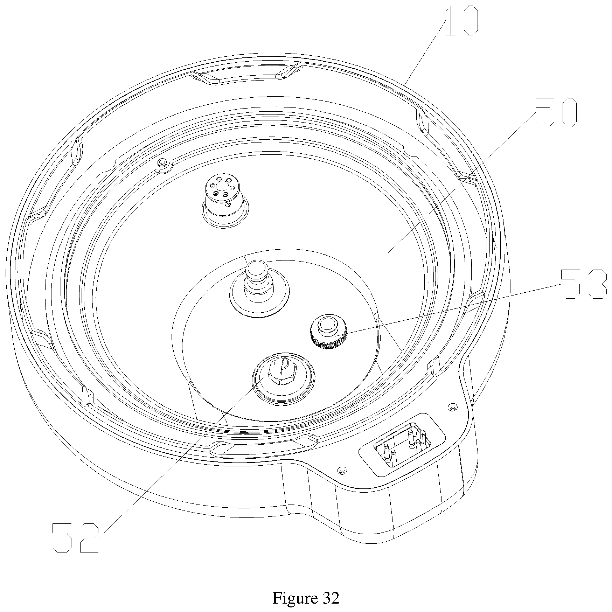

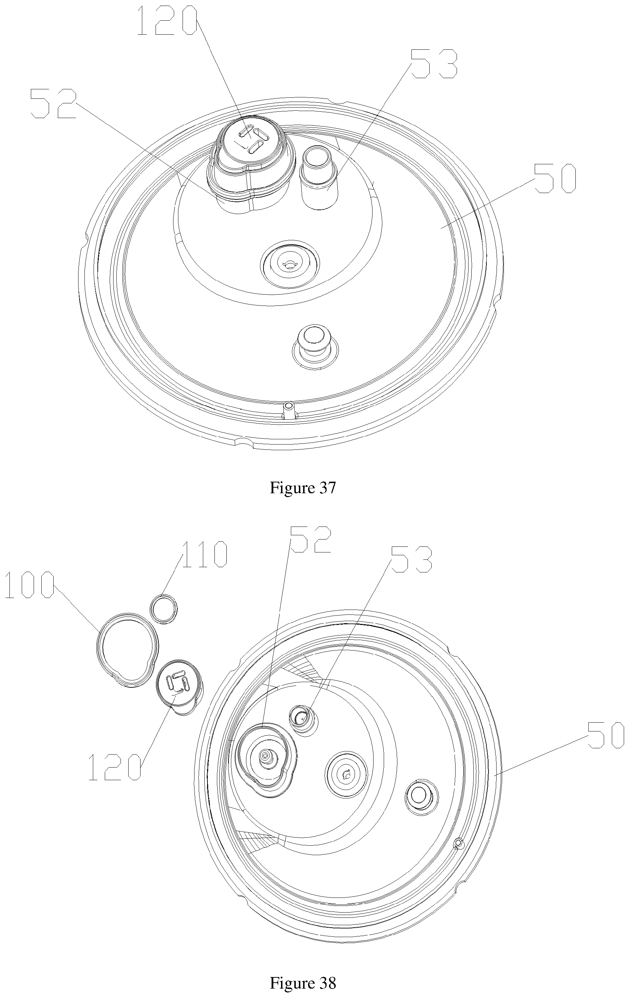

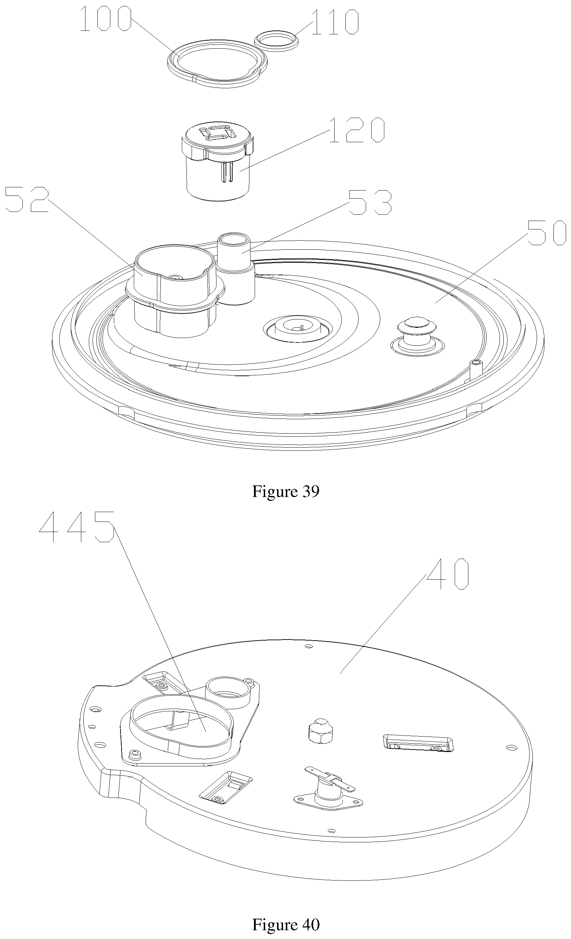

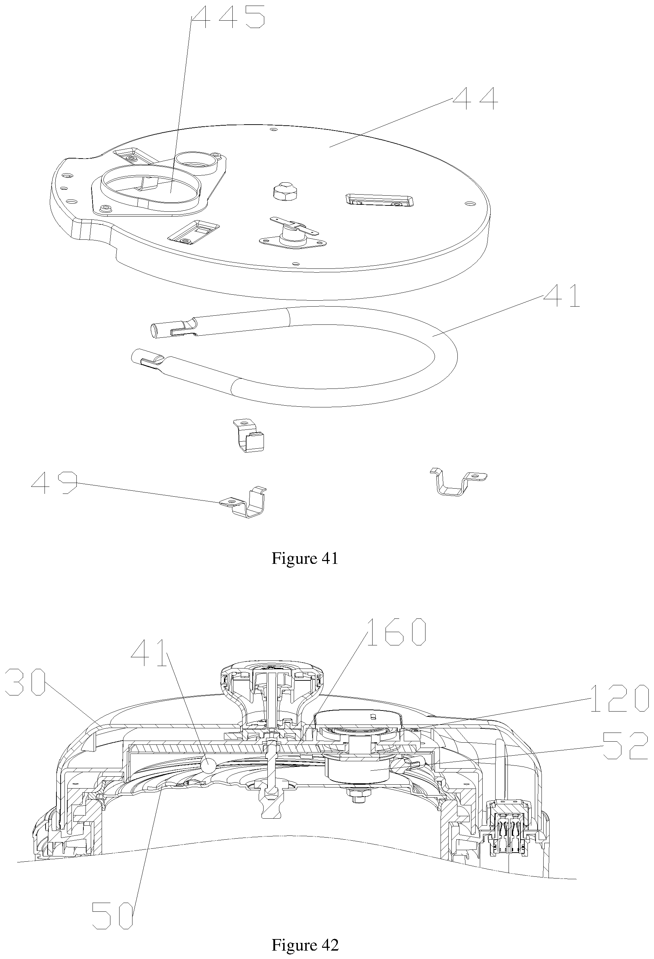

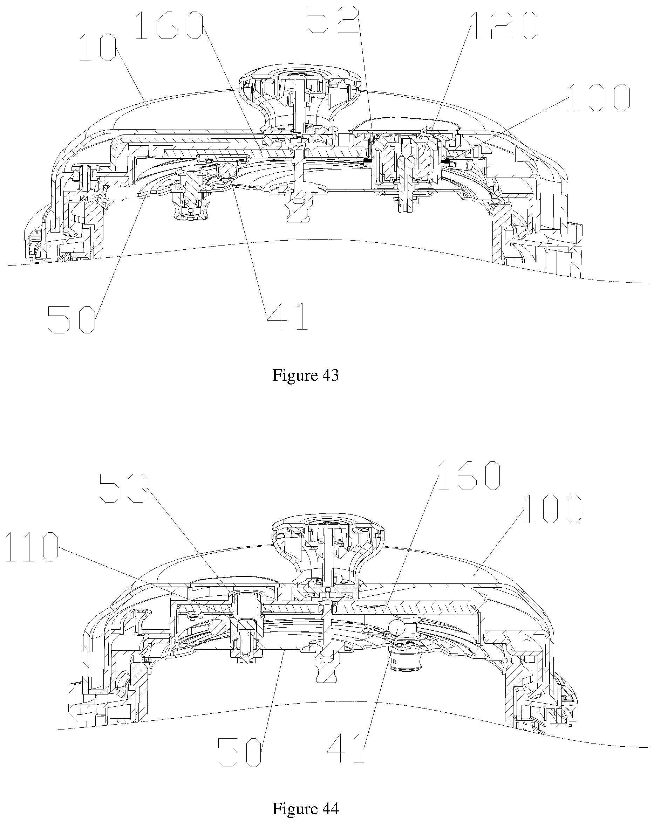

As shown in Figure 1 to Figure 50, a cooking device comprises a cover 10 and a body on which the cover 10 is arranged and capable of opening and closing the body. The device body comprises a heating structure. The cover 10 comprises a cover body 30, a baking assembly 40, and an inner cover 50. The cover body 30 is provided with a venting passage. The baking assembly 40 is provided inside the cover body 30 and comprises a heat shield 44 and a heating element 41 arranged below the heat shield 44. The inner cover 50 is detachably arranged below the baking assembly 40 and provided with a venting assembly 54 extending towards the cover body 30. A sealing structure 130 is provided between the venting assembly 54 and the venting passage.

Since the cover 10 is provided with both the baking assembly 40 and the inner cover 50, the cooking device can not only perform cooking by baking, but also perform cooking by boiling. As the inner cover 50 is detachably arranged below the baking assembly 40, when the cooking device is needed to perform cooking by baking, the inner cover 50 is detached, so as to use the baking assembly 40 to bake food materials inside the device body. When the cooking device is needed to perform pressurized cooking, the inner cover 50 is mounted below the baking assembly 40, so as to achieve conventional cooking. The sealing structure 130 can well insulate heat transmission between the baking assembly 40 and the cover body 30, so as to reduce the impact of heat on parts inside the cover body 30 and protect the cover body 30, therefore improving the reliability of the functioning of the cover body 30. Positioning the sealing structure 130 above a bottom face of the baking assembly 40 can reduce heat radiated by the heating element 41 directly to the sealing structure 130, thereby lengthen the service life of the sealing structure 130.

The sealing structure 130 is clamped between the cover body 30 and the baking assembly 40. The venting assembly 54 passes through the sealing structure 130 and is tight fitted with the sealing structure 130. With the sealing structure 130 clamped between the cover body 30 and the baking assembly 40, the gap between the baking assembly 40 and the cover body 30 can be sealed, thereby preventing air from entering into the gap between the cover body 30 and the baking assembly 40. In addition, the sealing structure 130 can also form a support to the cover body 30, so that the baking assembly 40 is reliably connected with the cover body 30.

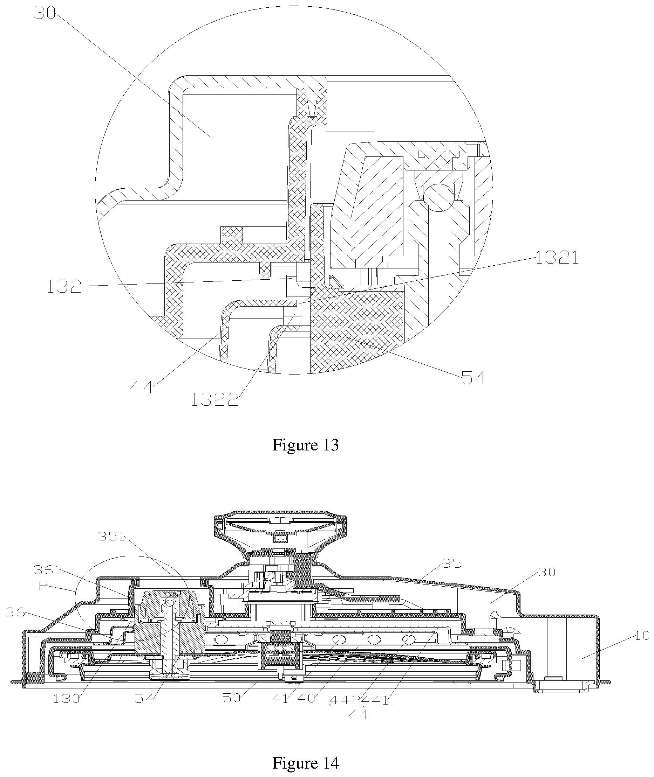

As shown in Figure 14, the cover body 30 comprises an outer cover 35 and an inner liner 36 arranged below the outer cover 35. The sealing structure 130 seals the gap between the baking assembly 40 and the outer cover 35 or the inner liner 36. This disposition can reduce air entering the space inside the cover body 30, thereby preventing humid air from affecting parts inside the cover body 30, and improving the reliability of the functioning of parts inside the cover body 30.

Optionally, the sealing structure 130 is a sealing ring.

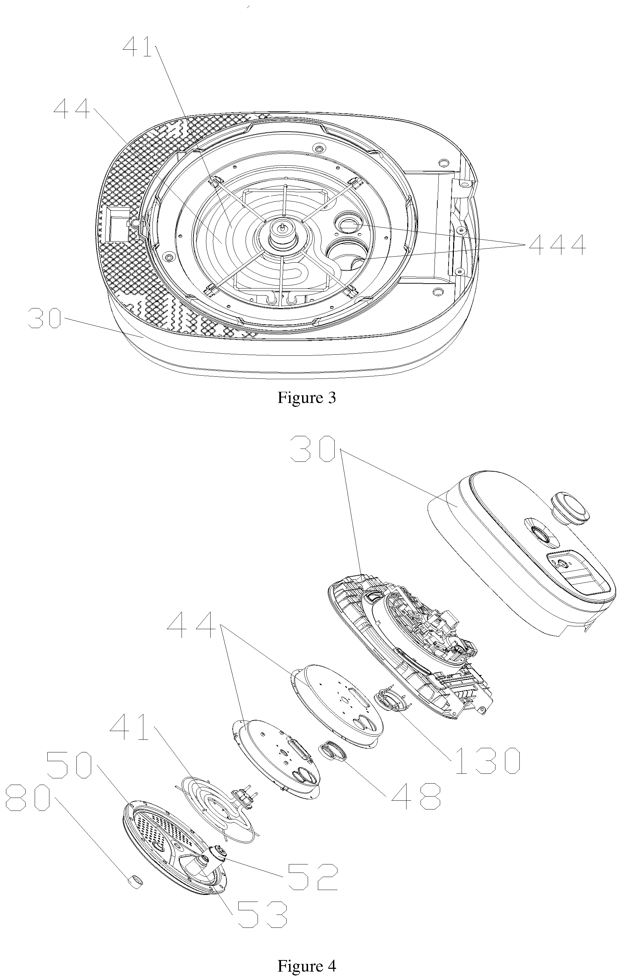

As shown in Figure 3, the orthographic projection of the heating element 41 on the heat shield 44 does not coincide with the orthographic projection of the sealing structure 130 on the heat shield 44. This disposition can increase the time needed for heat radiated by the heating element 41 to be transmitted to the sealing structure 130, reduce the temperature transmitted to the sealing structure 130, and thus lengthen the service life of the sealing structure 130.

Specifically, the sealing structure 130 is located above the heating element. This disposition can prevent the heating element 41 from being in direct contact with the sealing structure 130, thus reduce heat transmission and prevent direct contact of high temperature with the sealing structure 130. The reliability of the functioning of the sealing structure 130 is thus improved.

As shown in Figure 2, the heat shield 44 comprises a plurality of reflecting shells that are sequentially stacked, and the distance between two adjacent reflecting shells is not less than 6 mm. Having the distance between two adjacent reflecting shells limited to above 6 mm can effectively cool down the hot air, so as to ensure that heat has been reduced when the hot air is transmitted to the cover body 30, and will not affect the cover body 30. Of course, the distance between two adjacent reflecting shells should not be too large either, so as to avoid increasing the volume of the cover 10. It should be noted that, in all the embodiments described in the application, the heat shield 44 comprises two stacked reflecting shells, as an example. That is to say, in the embodiments of the application described below, the heat shield 44 comprises a first reflecting shell 441 and a second reflecting shell 442.

It should be noted that, the venting assembly 54 comprises a pressure limiting valve seat 52 and an opening disabling valve seat 53.

### First Embodiment

As shown in Figure 1 to Figure 12, the baking assembly 40 further comprises a support member 48 by which two adjacent reflecting shells are connected. In this embodiment, the support member 48 forms an air barrier between the two adjacent reflecting shells, so as to reduce heat transmitted to the reflecting shell close to the cover body 30 and heat transmitted to the cover body 30, so that the cover body 30 functions reliably.

As shown in Figure 4, the venting assembly 54 comprises a pressure limiting valve seat 52 and an opening disabling valve seat 53. The support member 48 comprises a position limiting hole 481 for the pressure limiting valve and a position limiting hole 482 for the opening disabling valve seat, the pressure limiting valve seat 52 and the opening disabling valve seat 53 respectively passes through its corresponding position limiting hole. The position limiting hole 481 for pressure limiting valve seat has a first annular flange 483 extending towards the pressure limiting valve seat 52. The position limiting hole 482 for opening disabling valve seat has a second annular flange 484 extending towards the opening disabling valve seat 53. In other words, the support member 48 is sleeved to the pressure limiting valve seat 52 and the opening disabling valve seat 53, while the first annular flange 483 and the second annular flange 484 can prevent the pressure limiting valve seat 52 and the opening disabling valve seat 53 from swaying, so as to improve the reliability of the functioning of the pressure limiting valve seat 52 and the opening disabling valve seat 53. In addition, the first annular flange 483 and the second annular flange 484 offer a certain tolerance in the fitting between the support member 48, and the pressure limiting valve seat 52 and the opening disabling valve seat 53. The support member 48 can also reduce the impact of the heat inside the baking assembly 40 on the pressure limiting valve seat 52 and the opening disabling valve seat 53, so as to protect the pressure limiting valve seat 52 and the opening disabling valve seat 53.

In this embodiment, the heat shield 44 is provided with through holes 444 for the pressure limiting valve seat 52 and the opening disabling valve seat 53 to pass through, and the support member 48 is arranged in a corresponding position to the through holes 444, so as to facilitate the passing-through of the pressure limiting valve seat 52 and the opening disabling valve seat 53.

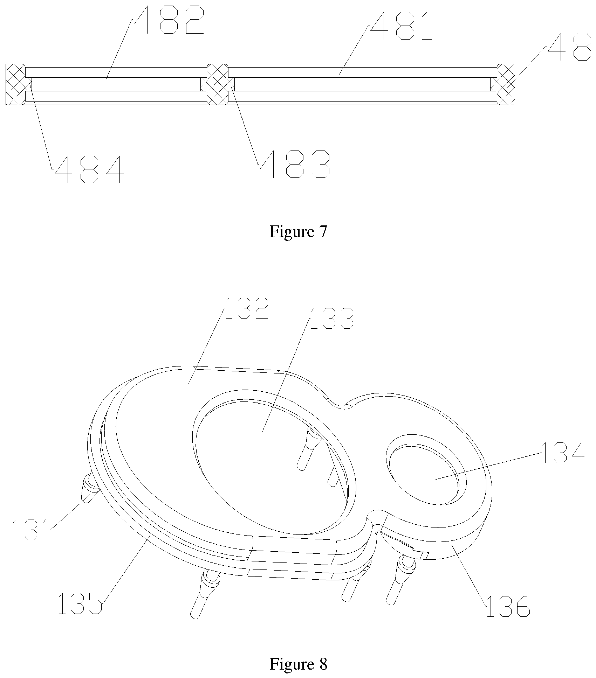

As shown in Figure 8 to Figure 10, the sealing structure 130 comprises a body part 132 and a plurality of position limiting feet 131 extending from the body part 132 towards the cover body 30 and cooperating with the cover body 30 in a position limiting manner. The position limiting feet 131 are provided along the circumference of the sealing structure 130. The position limiting feet 131 are connected with the cover body 30, for example by being inserted in corresponding holes arranged on an inner side of the cover body 30, so as to prevent the sealing structure 130 from detaching from the cover body 30, and improve the tightness of the connection between the sealing structure 130 and the cover body 30.

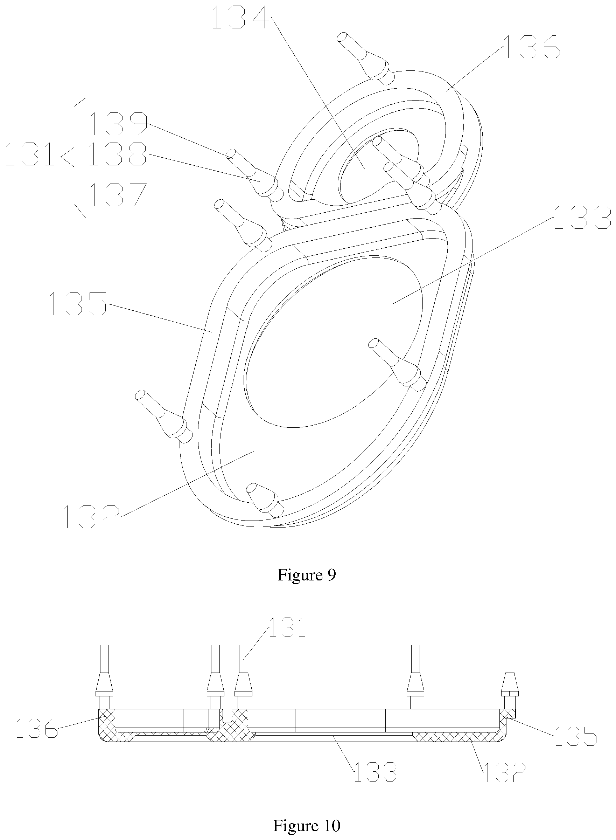

As shown in Figure 9, the position limiting feet 131 have a connecting section 137, a reinforcing section 138, and an extension section 139 that are sequentially connected. The connecting section 137 is connected with the body part 132. The outer diameter of the connecting section 137 is smaller than that of the reinforcing section 138. The reinforcing section 138 has a diameter-reducing section wherein the outer diameter gradually decreases towards the extension section 139. This disposition increases the tightness of the connection between the position limiting feet 131 and the cover body 30, and reduces the risk of detachment between the position limiting feet 131 and the cover body 30.

As shown in Figure 8 to Figure 10, the body part 132 further comprises an extension hole 133 for the pressure limiting valve seat and an extension hole 134 for the opening disabling valve. The pressure limiting valve seat 52 on the inner cover 50 passes through the extension hole 133 to connect with a pressure limiting valve 120. The opening disabling valve seat 53 on the inner cover 50 passes through the extension hole 134 to connect with an opening disabling valve 190. The position limiting feet 131 protrude from the body part 132. The sealing structure 130 seals the gap between the pressure limiting valve seat 52 and the through hole 444, as well as the gap between the opening disabling valve seat 53 and the through hole 444, so as to reduce heat transmitted to the cover body 30 and prevent hot air from affecting parts inside the cover body 30.

As shown in Figure 8 to Figure 10, the body part 132 has a first circumferential abutting flange 135 surrounding the extension hole 133 for the pressure limiting valve seat, and a second circumferential abutting flange 136 surrounding the extension hole 134 for the opening disabling valve seat. The first circumferential abutting flange 135 and the second circumferential abutting flange 136 abut against the cover body 30, so that the sealing structure 130 reliably seals the through holes 444.

Specifically, the side of the body part 132 that abuts against the baking assembly 40 is a flat face so as to reduce the gap between the sealing structure 130 and the baking assembly 40. Thus, heat flowing into the cover body 30 through the gap between the sealing structure 130 and the baking assembly 40 is reduced, thereby reducing the impact of heat on parts inside the cover body 30, so that the cover body 30 functions reliably.

As shown in Figure 9, at least part of the first circumferential abutting flange 135 extends along a boundary of the body part 132. In other words, at least part of the first circumferential abutting flange 135 is located at a boundary of the body part 132. The first circumferential abutting flange 135 can also prevent the pressure limiting valve seat 52 from swaying and improve the reliability of the functioning of the pressure limiting valve seat 52.

As shown in Figure 9, at least part of the second circumferential abutting flange 136 extends along a boundary of the body part 132. In other words, at least part of the second circumferential abutting flange 136 is located at a boundary of the body part 132. The second circumferential abutting flange 136 can also prevent the opening disabling valve seat 53 from swaying and improve the reliability of the functioning of the opening disabling valve seat 53.

As shown in Figure 9, the parts of the first circumferential abutting flange 135 and the second circumferential abutting flange 136 that are near each other are spaced apart, so as to form a deformation gap between them. The deformation gap increases the universality of the sealing structure 130, and offers a certain tolerance for the fitting between the pressure limiting valve seat 52 and the opening disabling valve seat 53. In addition, the deformation gap also makes it difficult for the sealing structure 130 to be detached from the pressure limiting valve seat 52 and the opening disabling valve seat 53, thereby improves the reliability of the sealing structure 130.

As shown in Figure 10, the first circumferential abutting flange 135 has a bent edge. The bent edge of the first circumferential abutting flange 135 creates a certain buffer gap between the pressure limiting valve seat 52 and parts surrounding it so as to prevent other parts from colliding with the pressure limiting valve seat 52, and thus improves the reliability of the functioning of the pressure limiting valve seat 52.At the same time it can prevent other parts from swaying.

In the specific embodiment shown in Figure 9, the position limiting feet 131 extend towards the cover body 30 from the first circumferential abutting flange 135 and/or the second circumferential abutting flange 136.

In the embodiment shown in Figure 4, the inner cover 50 is detachably connected with the baking assembly 40 by means of a fixing screw 80, so that the cooking device can switch between baking and pressure cooking.

### Second Embodiment

This embodiment differs from the first embodiment in that no support member 48 is provided, and the sealing structure 130 performs the function of the support member 48 as well.

As shown in Figure 13, the sealing structure 130 has a cooperating section 1321 extending downward from the body part 132 of the sealing structure 130 so as to seal the gap between two adjacent reflecting shells. This disposition allows one sealing structure 130 to seal the gaps between a plurality of parts, reduces the number of sealing elements, and thus reduces assembly cost and difficulty.

As shown in Figure 13, the cooperating section 1321 has a clamping section 1322 extending away from the venting assembly 54. At least one reflecting shell extends into a slot formed between the clamping section 1322 and the body part 132. The clamping section 1322 extends into the gap between the two adjacent reflecting shells and is pressed against the reflecting shells, so as to seal the gap between the two adjacent reflecting shells. This disposition reduces humid air entering between the two reflecting shells, and prevent humid air from affecting structural elements located between the reflecting shells. The clamping section 1322 replaces the separately provided support member 48, and reduces the use and fitting of structural elements, thus makes it easier and more convenient to assemble the cooking device.

### Third Embodiment

This embodiment differs from the first embodiment in that the sealing structure 130 can be detached together with the inner cover.

Specifically, the venting assembly 54 is providing with a mounting slot (not shown in the figures) inside which at least a part of the sealing structure 130 is snap-fitted, so as to detach the sealing structure 130 together with the inner cover 50. With this disposition, when the cooking device performs cooking by baking, the inner cover 50 is detached together with the sealing structure 130, so as to reduce the impact of high temperature of the baking assembly 40 and improve the reliability of the functioning of the sealing structure.

### Fourth Embodiment

This embodiment differs from the first embodiment in that the specific structure of the sealing structure 130 is different.

As shown in Figure 14 to Figure 17, the sealing structure 130 has a body section 201 that clamped between the cover body 30 and the baking assembly 40 and a sealing section 202 extending from an inner periphery of the body section 201 and tight fitted with the venting assembly 54. The body section 201 is clamped between the cover body 30 and the baking assembly 40 so as to seal the gap between the cover body 30 and the baking assembly 40. The sealing section 202 is tight fitted with the venting assembly 54 so as to seal the gap between the venting assembly 54 and the cover body 30 and/or the baking assembly 40. In addition, the body section 201 can also support the cover body 30 to a certain extent and reduce the deformation of the cover body 30, so that the cover body 30 can be reliably used.

As shown in Figure 14 to Figure 17, the sealing structure 130 has the body section 201, as well as a first bending section located at the top of the body section 201 and a second bending section located at the bottom of the body section 201, the bending direction of the first bending section is opposite to that of the second bending section. The upper surface of the first bending section abuts against the lower surface of the cover body 30. The lower surface of the second bending section abuts against the upper surface of the baking assembly 40. The upper surface of the first bending section abuts against the lower surface of the cover body 30, so that the sealing structure 130 and the cover body 30 are sealed with no gap, and air cannot enter the gap between the cover body 30 and the baking assembly 40 by passing through a gap between the sealing structure 130 and the cover body 30. The lower surface of the second bending section abuts against the upper surface of the baking assembly 40, so that the sealing structure 130 and the baking assembly 40 are sealed with no gap, and air cannot enter the gap between the cover body 30 and the baking assembly 40 through a gap between the sealing structure 130 and the baking assembly 40. Thus the sealing of the cover 10 is improved, and the impact of air on the space inside the baking assembly 40 and the cover body 30 can be reduced.

As shown in Figure 14 to Figure 17, the one among the first bending section and the second bending section that bends towards the venting assembly 54 is the sealing section 202, which is interference fitted with the venting assembly 54, so as to prevent steam from entering the space between the cover body 30 and the baking assembly 40. The sealing section 202 can seal the gap between the cover body 30 and the venting assembly 54, and prevent air from flowing back into the space between the cover body 30 and the baking assembly 40. The sealing section 202 can also seal the gap between the baking assembly 40 and a security valve, so as to prevent air from flowing back into the baking assembly 40. Therefore, the impact of water content in air on parts inside the baking assembly 40 is reduced and the service life of parts inside the baking assembly 40 is prolonged.

As shown in Figure 14, the baking assembly 40 comprises a heat shield 44 and a heating element 41.The sealing structure 130 is clamped between the cover body 30 and the heat shield 44. This disposition can reduce direct radiation of the heating element 41 to the sealing structure 130, reduce the effect of high temperature on the sealing structure 130, and lengthen the service life of the sealing structure 130.

In this embodiment, the heat shield 44 comprises a first reflecting shell 441 and a second reflecting shell 442, which are connected with each other and spaced apart.

It should be noted that, in this embodiment, the heat shield 44 only has two reflecting shells, namely, the first reflecting shell 441 and the second reflecting shell 442.

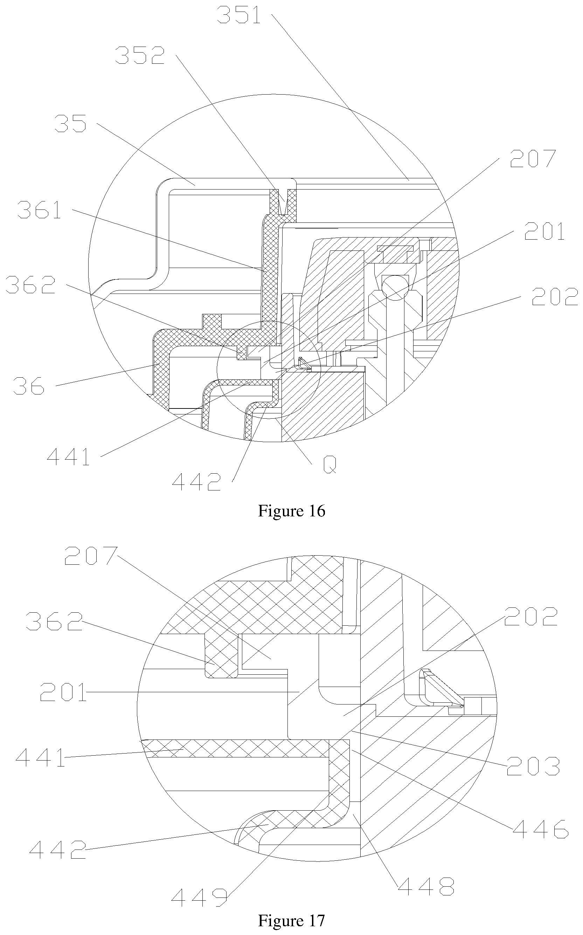

As shown in Figure 17, the sealing section 202 has an oblique guiding face 203 extending obliquely upwards from a bottom face of the sealing section 202 towards the venting assembly 54, so as to facilitate the passing through of the venting assembly 54. The oblique guiding face 203 extends obliquely upwards towards the venting assembly 54 so as to facilitate the venting assembly 54 passing through the sealing structure 130 to extend upwards and to be interference fitted with a pressure limiting valve seat to improve the sealing of the sealing structure 130.

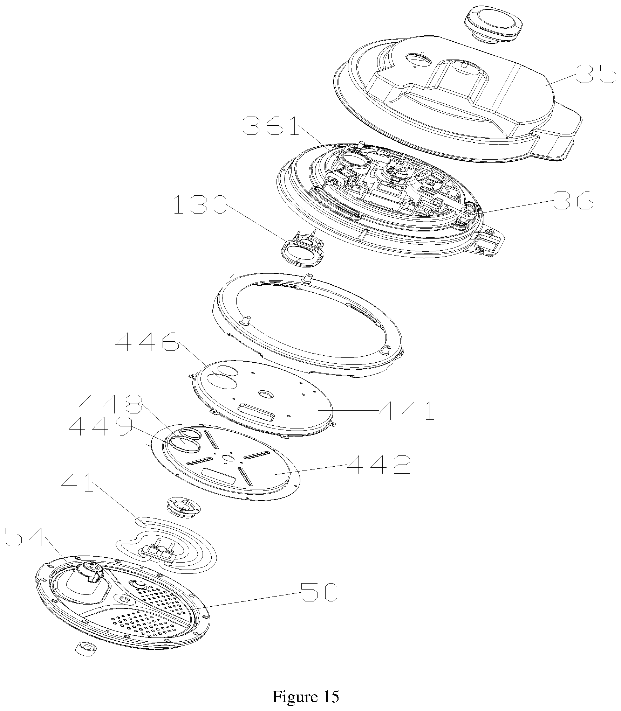

As shown in Figure 15, the baking assembly 40 comprises the first reflecting shell 441 and the second reflecting shell 442 that are connected with each other. The second reflecting shell 442 is located below the first reflecting shell 441. The first reflecting shell 441 has a first passing hole 446 for the venting assembly 54 to pass through. The second reflecting shell 442 has a second passing hole 448 for the venting assembly 54 to pass through. The second reflecting shell 442 has a second sealing ring rib 449. The second sealing ring rib 449 extends upwards from the boundary of the second passing hole 448 and abuts against the first reflecting shell 441, so as to achieve a sealing there between; and/or, the location where the second sealing annular rib 449 abuts against the first reflecting shell 441 is sealed by the sealing structure 130. With this disposition, no more sealing structural element need to be provided between the first reflecting shell 441 and the second reflecting shell 442, thereby reducing the number of structural elements. In addition, structural elements used for sealing are generally plastic parts, which are susceptible to be damaged after being subject to high temperature, resulting in poor sealing. With this disposition, the gap between the first reflecting shell 441 and the second reflecting shell 442 can be reliably sealed, and not affected by high temperature.

Of course, it is also possible that a first sealing ring rib extends from the first reflecting shell 441 towards the second reflecting shell 442. The first reflecting shell 441 has the first sealing ring rib extending downwards from a boundary of the first passing hole 446 and abutting against the second reflecting shell 442, so as to achieve sealing. The first sealing ring rib has the same function as the second sealing ring rib, and is not described further here.

As shown in Figure 15, the cover body 30 comprises an outer cover 35 that has a venting hole 351 corresponding to the venting assembly 54, and an inner liner 36 located below the outer cover 35. The inner liner 36 has an abutting cylinder 361 extending towards the outer cover 35 and tight fitted with the outer cover 35, so as to prevent steam from entering the space between the outer cover 35 and the inner liner 36. By providing the abutting cylinder 361, the gap between the inner liner 36 and the outer cover 35 is sealed, so as to prevent air from entering the gap between the inner liner 36 and the outer cover 35. The sealing structure 130 is located between the inner liner 36 and the baking assembly 40, so as to seal the gap between the inner liner 36 and the baking assembly 40, and to seal the gap between the baking assembly 40 and a safety valve at the same time.

As shown in Figure 16, the inner liner 36 has an annular supporting rib 362 extending towards the baking assembly 40. The one among the first bending section and the second bending section that bends towards the venting assembly 54 is the abutting section 207. The abutting section 207 cooperates with the annular supporting rib 362 in an abutting manner in the radial direction of the abutting cylinder 361, so as to prevent incorrect positioning of the sealing structure 130. By providing the annular supporting rib 362, the sealing structure 130 is not susceptible to swaying after being mounted to position, improving the reliability of the sealing of the sealing structure 130.

### Fifth Embodiment

The fifth embodiment is similar to the fourth embodiment, and differs from the fourth embodiment in that the sealing structure 130 has a different structure.

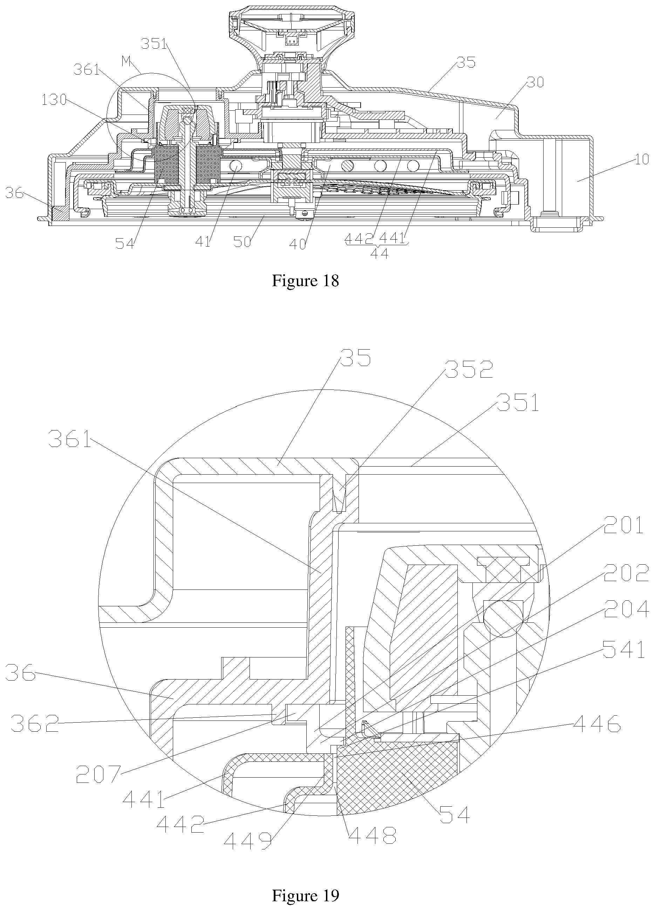

As shown in Figure 18 and Figure 19, the venting assembly 54 is provided with a mounting flange 541. The sealing section 202 is provided with an overlapping flange 204 extending towards the venting assembly 54 and overlaps with the mounting flange 541. The overlapping flange 204 is interference fitted with the venting assembly 54. The fitting between the mounting flange 541 and the overlapping flange 204 allows a tighter connection between the sealing structure 130 and the venting assembly 54, thus makes it difficult for the sealing structure 130 to be detached from the venting assembly 54, and can also improve the sealing effect of the sealing structure 130.

### Sixth Embodiment

The sixth embodiment is similar to the fourth embodiment, and differs from the fourth embodiment in that the second reflecting shell 442 is not provided with the second sealing ring rib 449. Instead, the gap between the first reflecting shell 441 and the second reflecting shell 442 is sealed by means of the sealing structure 130.

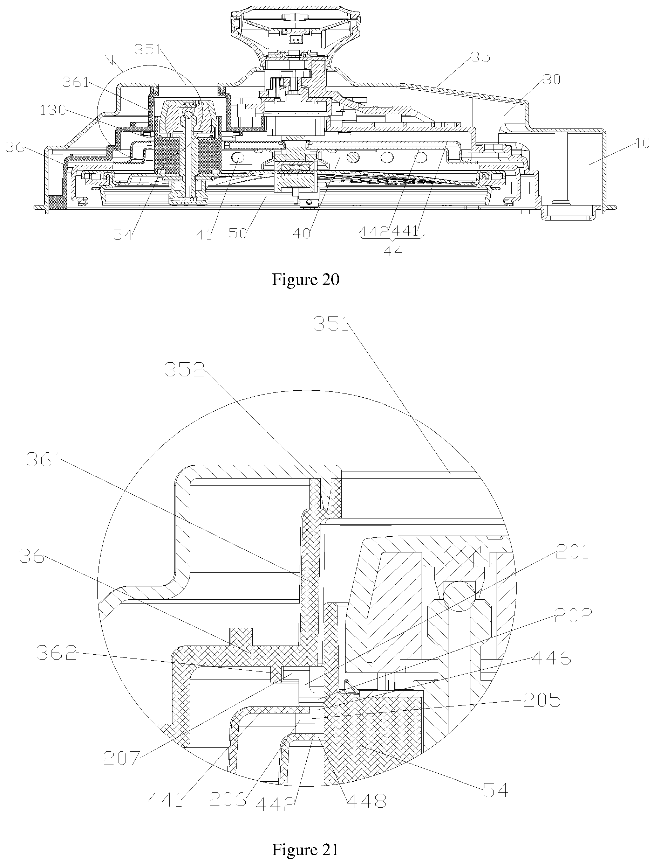

As shown in Figure 20 and Figure 21, the baking assembly 40 comprise a first reflecting shell 441 and a second reflecting shell 442 that are connected with each other. The second reflecting shell 442 is located below and spaced apart from the first reflecting shell 441 so as to form a heat barrier gap between the two. The first reflecting shell 441 has a first passing hole 446 for the venting assembly 54 to pass through. The second reflecting shell 442 has a second passing hole 448 for the venting assembly 54 to pass through. The sealing structure 130 has a cooperating section 205 extending downwards from the sealing section 202 and sealingly cooperate with a boundary of the first passing hole 446 and a boundary of the second passing hole 448, so that the heat barrier gap is sealed. With this disposition, the gaps between multiple parts can be sealed by means of one sealing structure 130, thereby reducing the number of sealing elements, and thus assembly cost and difficulty. The heating element 41 is located below the second reflecting shell 442. The heat barrier gap can reduce the temperature transmitted to the cover body 30, and improve the reliability of the functioning of the cover body 30.

As shown in Figure 21, the cooperating section 205 has a clamping section 206 extending away from the venting assembly 54. The first reflecting shell 441 extends into a slot formed between the clamping section 206 and the sealing section 202. The lower surface of the clamping section 206 is pressed against the second reflecting shell 442, so as to seal the gap between the first reflecting shell 441 and the second reflecting shell 442. The clamping part 206 extends between the first reflecting shell 441 and the second reflecting shell 442, preventing air from entering into the gap between the first reflecting shell 441 and the second reflecting shell 442. It should be noted, the clamping section 206 only extends over a certain distance between the first reflecting shell 441 and the second reflecting shell 442, and will not seal the entire heat barrier gap.

### Seventh Embodiment

The seventh embodiment is similar to the fourth embodiment, and differs from the fourth embodiment in that an abutting rib 352 not only abuts against the abutting cylinder 361, but also cooperates sealingly with the sealing structure 130.

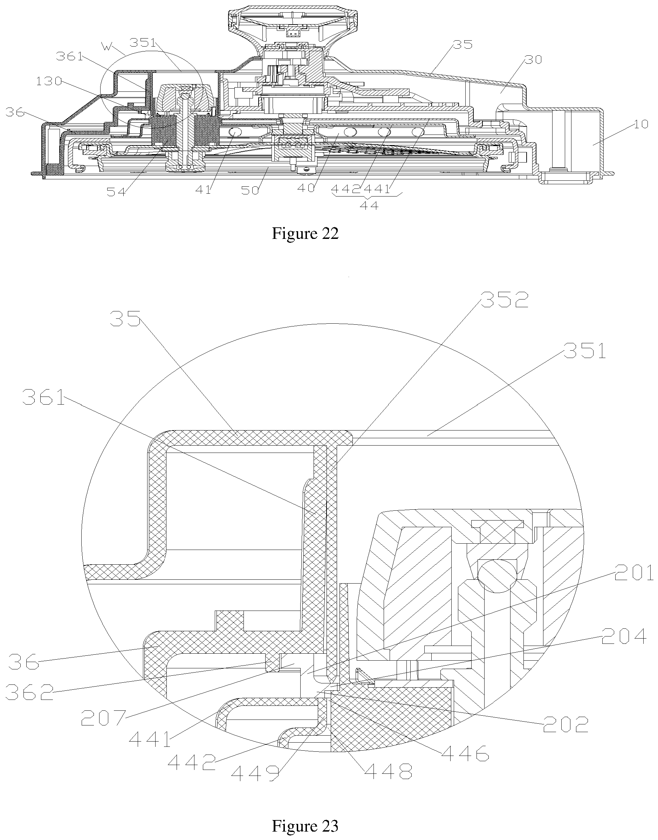

As shown in Figure 22 and Figure 23, an abutting rib 352 is arranged at a boundary of the venting hole 351 of the outer cover 35 and extends towards the baking assembly 40. The abutting rib 352 extends till the sealing section 202, and abuts against the sealing section 202, so as to seal the gap between the cover body 30 and the baking assembly 40. In the application, the abutting rib 352 surrounds the venting hole 351 of the outer cover 35 and is cylinder-shaped. Thus, the gap between the cover body 30, the baking assembly 40, and the venting assembly 54 is made smaller, thus the sealing structure 130 only needs seal the gap between the abutting rib 352 and the baking assembly 40.

### Eighth Embodiment

This embodiment differs from the first embodiment in that, in this embodiment, the baking assembly 40 or the cover body 30 has a sealing cylinder 230, so as to seal at least a part of the cover body 30 or the baking assembly 40 by contact.

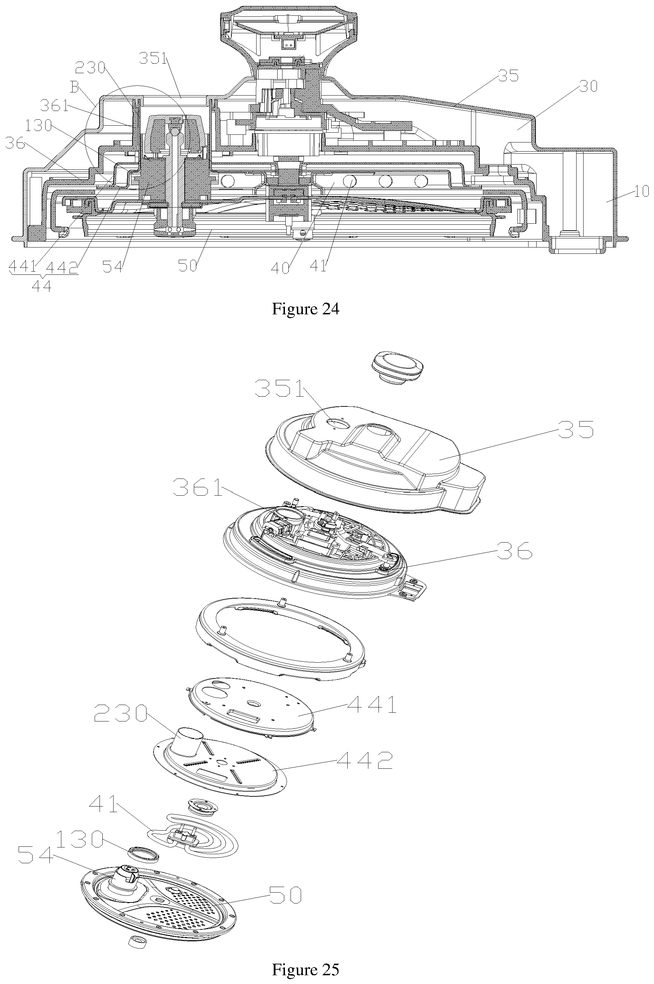

As shown in Figure 24 to Figure 26, the cooking device comprises a cover 10 and a body on which the cover 10 is arranged and capable of opening and closing the body. The cover 10 comprises a cover body 30, a baking assembly 40, and an inner cover 50. The baking assembly 40 is provided inside the cover body 30. The inner cover 50 is detachably arranged below the baking assembly 40 and has the venting assembly 54 extending towards the cover body 30. The baking assembly 40 or the cover body 30 has a sealing cylinder 230 for the venting assembly 54 to pass through. The sealing cylinder 230 seals at least a part of the cover body 30 or the baking assembly 40 by contact.

The sealing cylinder 230 arranged on the baking assembly 40 or the cover body 30, the gap between the baking assembly 40 and the cover body 30 can be sealed, without the need to provide other sealing elements between the baking assembly 40 and the cover body 30. Thus, the number of sealing elements is reduced, therefore the assembly difficulty of the cooking device and the assembly cost of the cooking device are all reduced. In addition, with the sealing cylinder 230 arranged on the baking assembly 40 or the cover body 30, once the baking assembly 40 and the cover body 30 are assembled together, the position of the sealing cylinder 230 is fixed, and thus can reliably seal the gap between the baking assembly 40 and the cover body 30, thereby improving the reliability of the sealing of the cooking device.

In a specific embodiment not illustrated, the cover body 30 comprises an outer cover 35 and an inner liner 36. The outer cover 35 is provided with the sealing cylinder 230 which extends towards the baking assembly 40, and is sealed with the baking assembly 40 by contact. With the sealing cylinder 230 extending from the outer cover 35 towards the baking assembly 40, the gap between the outer cover 35 and the inner liner 36 at the venting assembly 54 is sealed as well. The number of sealing elements is reduced, while improving the reliability of the sealing, so that multiple locations are sealed at the same time with one sealing cylinder 230.

In a specific embodiment not illustrated, the baking assembly 40 comprises a heat shield 44 provided with the sealing cylinder 230 and a heating element 41. The heat shield 44 envelops the heating element 441, so as to prevent high temperature air produced by the heating element 41 from radiating towards the cover body 30. Thus, the effect of high temperature on the cover body 30 is avoided, and the heat is reflected into the device body, so as to rapidly cook food inside the device body. With the heat shield 44 being provided with the sealing cylinder 230, the gap between the baking assembly 40 and the cover body 30 and the gap between the outer cover 35 and the inner liner 36 can be both sealed.

As shown in Figure 24 to Figure 26, the baking assembly 40 comprises a first reflecting shell 441 and a second reflecting shell 442 that are connected with each other. Compared to the second reflecting shell 442, the first reflecting shell 441 is arranged further away from the inner cover 50. The sealing cylinder 230 passes through the first reflecting shell 441 from the second reflecting shell 442, and then extends into the cover body 30. The heating element 41 is located below the second the second reflecting shell 442. The second reflecting shell 442 reflects heat radiated by the heating element 41 towards the device body. A heat barrier gap is formed between the first reflecting shell 441 and the second reflecting shell 442, so as to reduce the temperature transmitted to the first reflecting shell 441. In addition, the first reflecting shell 441 can form a further heat barrier, reducing the temperature transmitted to the cover body 30. The sealing cylinder 230 extends from the second reflecting shell 442 towards the cover body 30, so that the sealing cylinder 230 can also further seal the gap between the first reflecting shell 441 and the second reflecting shell 442 near the venting assembly 54, preventing hot air from entering between the first reflecting shell 441 and the second reflecting shell 442.

Optionally, the sealing cylinder 230 is made of a heat insulating material.

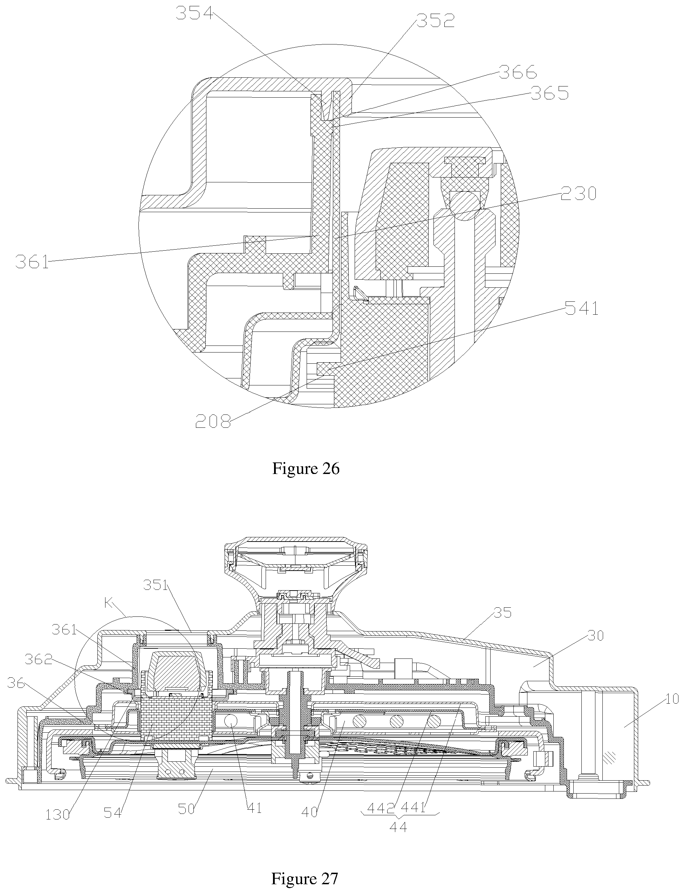

As shown in Figure 26, the cover body 30 comprises an outer cover 35 and an inner liner 36. The outer cover 35 or the inner liner 36 has a venting hole 351 that faces the venting assembly 54. An abutting rib 352 is arranged at the boundary of the venting hole 351 and extending towards the baking assembly 40. The abutting rib 352 cooperates with the sealing cylinder 230 in an abutting manner in the radial direction of the sealing cylinder 230. With such disposition, swaying of the sealing cylinder 230 can be reduced, thus problems due to poor sealing are reduced.

As shown in Figure 26, the abutting rib 352 is pressed against an inner wall of the sealing cylinder 230; and/or, a top face of the sealing cylinder 230 abuts against the outer cover 35 or the inner liner 36. A first sealing of the cover body 30 is achieved by pressing the abutting rib 352 against the inner wall of the sealing cylinder 230, preventing air from entering inside the cover body. A second sealing of the cover body 30 is achieved between the top face of the sealing cylinder 230 and the outer cover 35, greatly improving the sealing between the baking assembly 40 and the cover body 30 and improving the reliability of the sealing.

As shown in Figure 26, the cover body 30 further comprises the inner liner 36. The inner liner 36 has an abutting cylinder 361. The sealing cylinder 230 extends into the abutting cylinder 361 and cooperates with an inner wall of the abutting cylinder 361 in an abutting manner in the radial direction of the sealing cylinder 230. With the cooperation between the abutting cylinder 361 and the sealing cylinder 230, swaying of the sealing cylinder 230 can be reduced, thus improving the reliability of the sealing of the sealing cylinder 230.

As shown in Figure 26, the inner wall of the abutting cylinder 361 has a flanging section 365 extending towards the sealing cylinder 230. The flanging section 365 is arranged to be pressed against an outer wall of the sealing cylinder 230, so as to form a first sealing of the inner liner 36. With the flanging section 365, air entering between the outer cover 35 and the inner liner 36 can be reduced, thereby preventing humid air from affecting electrical parts on the inner liner 36 and increasing the reliability of the functioning and service life of electrical parts on the inner liner 36.

As shown in Figure 26, the outer cover 35 has a sealing rib 354 extending towards the inner liner 36. The abutting rib 352 and the sealing rib 354 form a slot. The sealing cylinder 230 is inserted into the slot, and is interference fitted with the slot, forming a first sealing between the outer cover 35 and the heat shield 44. With this disposition, sealing is achieved between the sealing cylinder 230 and both the abutting rib 352 and the sealing rib 354, so as to reduce air entering into the gap between the inner liner 36 and the outer cover 35, improving the sealing of the cooking device.

As shown in Figure 26, the cover body 30 comprises the outer cover 35. The inner liner 36 is provided below the outer cover 35. The outer cover 35 has the venting hole 351 facing the venting assembly 54. The outer cover 35 has the sealing rib 354 extending towards the inner liner 36. The sealing rib 354 is located at the outer side of the sealing cylinder 230 and abuts against the inner liner 36 to at least achieve a second sealing of the inner liner 36. This arrangement improves the sealing between the outer cover 35 and the inner liner 36 without the separately providing sealing elements, thereby reducing the assembly difficulty of the cooking device.

As shown in Figure 26, a top part of the abutting cylinder 361 radially bends outwards and then extends upwards vertically, so as to form a radial stepped face 366 at the inner wall of the abutting cylinder 361. The flanging section 3651 is located below the radial stepped face 366. A free end of the sealing rib 354 abuts against the radial stepped face 366, so as to achieve a second sealing of the inner liner 36. The part of the inner wall of the abutting cylinder 361 located below the radial stepped face 366 abuts against the outer wall of the sealing cylinder 230, so as to achieve a third sealing of the inner liner 36. Triple sealing is achieved between the inner liner 36, and the outer cover 35 and the sealing cylinder 230, thereby greatly reducing air entering between the inner liner 36 and the outer cover 35, and improving the sealing between the inner liner 36 and the outer cover 35, so that electrical parts on the inner liner 36 function reliably.

As shown in Figure 26, the thickness of the sealing rib 354 gradually decreases towards the inner cover 50. With the thickness of the sealing rib 354 gradually decreasing, it is easier for the sealing rib 354 to be inserted extending into the gap between the sealing cylinder 230 and the inner liner 36, and at least a part of the sealing rib 354 is interference fitted with the inner liner 36.

As shown in Figure 26, the cover 10 further comprises a sealing structure 130. The sealing structure 130 is mounted on the venting assembly 54. The venting assembly 54 has a mounting flange 541. The sealing structure 130 has a mounting ring slot 208 in which the mounting flange 541 is inserted into. The sealing structure 130 abuts against the second reflecting shell 442 of the baking assembly 40, so as to seal the gap between the second reflecting shell 442 and the venting assembly 54. The sealing structure 130 is provided on the venting assembly 54 and can be detached together with the inner cover 50. By providing the sealing structure 130, the gap between a pressure limiting valve seat and the baking assembly 40 can be sealed, reducing air entering into the baking assembly 40, thus limiting the effect of humid air on parts inside the baking assembly 40. By providing the mounting flange 541, a mounting position can be defined for the sealing structure 130, so that the sealing structure 130 can be reliably sleeved to a pressure limiting valve seat. With the sealing structure 130 being detachable together with the inner cover 50, high temperature baking of the sealing structure 130 by the baking assembly 40 can be reduced, thus prolonging the service life of the sealing structure 130.

### Ninth Embodiment

This embodiment differs from the first embodiment in that, in this embodiment, a sealing between the outer cover and the inner liner is achieved.

As shown in Figure 27 to Figure 29, the cooking device comprises a cover 10 and a body on which the cover 10 is arranged and capable of opening and closing the body. The cover 10 comprises a cover body 30 and an inner cover 50. The cover body 30 comprises an outer cover 35 and an inner liner 36. The outer cover 35 has a venting hole 351. The inner liner 36 has an abutting cylinder 361 extending towards the outer cover 35 and facing the venting hole 351. The outer cover 35 has an annular sealing rib extending towards the inner liner 361 and abuts against the abutting cylinder 361 in its radial direction, so that the junction between the inner liner 36 and the outer cover 35 is sealed by means of the annular sealing rib.

With the inner liner 36 being provided with the abutting cylinder 361, the gap between the inner liner 36 and the outer cover 35 can be sealed so as to prevent air from entering the gap between the inner liner 36 and the outer cover 35, thereby reducing the effect of air on structural elements between the inner liner 36 and the outer cover 35 and improving the reliability of their functioning. In addition, by providing the abutting cylinder 361, sealing between the outer cover 35 and the inner liner 36 can be achieved without separately mounting structural sealing elements anymore, reducing the number of sealing elements, and the assembly cost and assembly difficulty of the cooking device. By providing the annular sealing rib, the inner liner 36 and the outer cover 35 cooperate with each other in an abutting manner, so as to reduce swaying between them and improve the sealing between them. It should be noted that, structural sealing elements are mostly plastic parts, which are susceptible to breaking and unreliable functioning when located in a humid environment for a long time. Such problems are solved with the abutting cylinder 361.

In the prior art, due to the particularity of a pressure-baking cooker, both released steam during pressure cooking and hot air during baking are evacuated through the same passage, resulting in a short life of silica gel. In the invention, by means of the self-sealing between the outer cover 35 and the inner liner 36, the use of sealing silica gel can be reduced, thereby improving the sealing reliability and reducing safety risks.

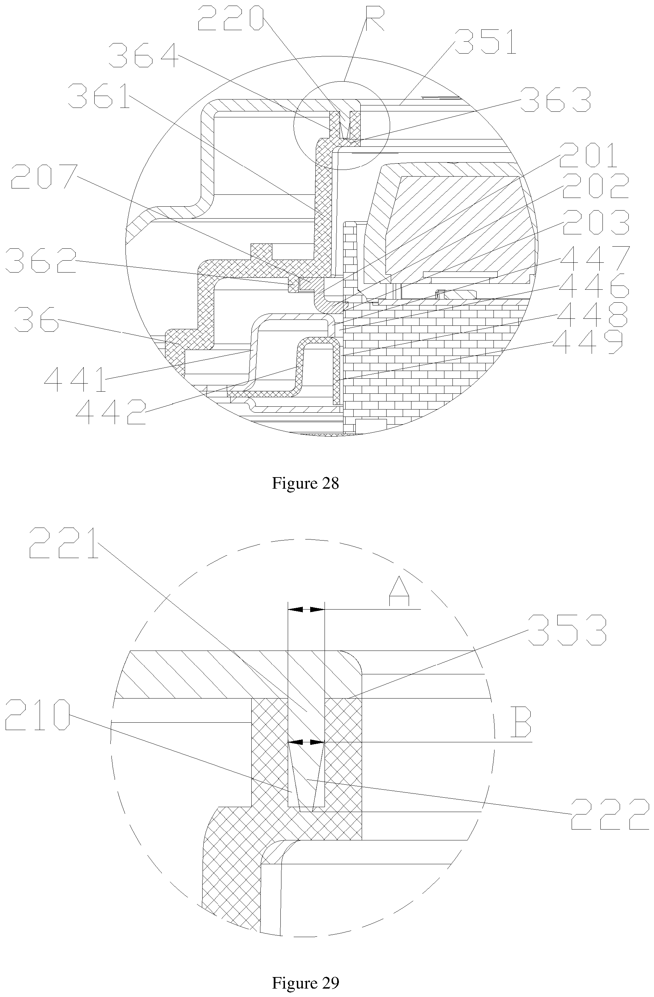

As shown in Figure 29, a slot 210 is arranged on top of the abutting cylinder 361. The outer cover 35 has a sealing element 220 that extends into the slot 210 and is interference fitted with it. The annular sealing rib is used as the sealing element 220. The annular sealing rib is inserted into the slot 210 and is interference fitted with the slot 210. With the annular sealing rib being inserted into the slot 210, the tightness of the connection between the annular sealing rib and the abutting cylinder 361 is improved. The interference fit improves the sealing between the outer cover 25 and the inner liner 36, and greatly reduces humid air entering into the space between the inner liner 36 and the outer cover 35.

As shown in Figure 27, the baking assembly 40 comprises a heat shield 44 and a heating element 41. The sealing structure 130 is clamped between the cover body 30 and the heat shield 44. This disposition can reduce direct radiation of the heating element 41 on the sealing structure 130, reduce the effect of high temperature on the sealing structure 130, and lengthen the service life of the sealing structure 130.

In this embodiment, the heat shield 44 comprises a first reflecting shell 441 and a second reflecting shell 442 that are connected with each other and spaced apart.

As shown in Figure 27, the inner cover 50 is provided with a venting assembly 54 extending towards the cover body 30 and facing the venting hole 351. The venting assembly 54 extends into the abutting cylinder 361. The venting assembly 54 comprises at least one of a pressure limiting valve seat and an opening disabling valve seat. With this disposition, the abutting cylinder 361 limits the swaying of the venting assembly 54, seals the gap between the inner liner 36 and the outer cover 35, and improves the reliability of the sealing of the baking assembly 40.

As shown in Figure 28, the sealing structure 130 has a body section 201 clamped between the cover body 30 and the baking assembly 40, and a sealing section 202 extending from the inner periphery of the body section 201. The venting assembly 54 is tight fitted with the sealing section 202. The body section 201 is clamped between the cover body 30 and the baking assembly 40, so as to seal the gap between the cover body 30 and the baking assembly 40, while the sealing section 202 is tight fitted with the venting assembly 54, so as to seal the gap between the venting assembly 54 and the cover body 30 and/or the baking assembly 40. In addition, the body section 201 can further provide support to a certain extent to the cover body 30, so as to reduce the deformation of the cover body 30, and allows reliable functioning of the cover body 30.

The sealing section 202 is provided with an oblique guiding face 203 extending obliquely upwards from a bottom face of the sealing section 202 towards the venting assembly 54, so as to facilitate the passing through of the venting assembly 54. The oblique guiding face 203 extends obliquely upwards towards the venting assembly 54 to facilitate the venting assembly 54 to pass through the sealing structure 130 while extending upwards to be interference fitted with a pressure limiting valve seat, thereby improving the sealing effect of the sealing structure 130.

As shown in Figure 28, the sealing structure 130 has the body section 201, as well as a first bending section located at the top of the body section 201 and a second bending section located at the bottom of the body section 201, and the bending direction of the first bending section is opposite to that of the second bending section. The upper surface of the first bending section abuts against the lower surface of the cover body 30. The lower surface of the second bending section abuts against the upper surface of the baking assembly 40. The upper surface of the first bending section abuts against the lower surface of the cover body 30, so that the sealing structure 130 and the cover body 30 are sealed with in a gapless manner, thereby preventing air from entering the gap between the cover body 30 and the baking assembly 40 through any gap between the sealing structure 130 and the cover body 30. The lower surface of the second bending section abuts against the upper surface of the baking assembly 40, so that the sealing structure 130 and the baking assembly 40 are sealed in a gapless manner, achieving sealing, thereby preventing air from entering the gap between the cover body 30 and the baking assembly 40 through any gap between the sealing structure 130 and the baking assembly 40. Thus, the sealing of the cover 10 is improved, reducing the effect of air on the space inside the baking assembly 40 and the cover body 30.

As shown in Figure 28, the one among the first bending section and the second bending section that bends towards the venting assembly 54 is the sealing section 202, which is interference fitted with the venting assembly 54, so as to prevent steam from entering the space between the cover body 30 and the baking assembly 40. The sealing section 202 can seal the gap between the cover body 30 and the venting assembly 54, and prevent air from flowing back into the space between the cover body 30 and the baking assembly 40. The sealing section 202 can also seal the gap between the baking assembly 40 and a safety valve, preventing air from flowing back into the baking assembly 40, thereby reducing the effect of water content in air on parts inside the baking assembly 40, and lengthening the service life of parts inside the baking assembly 40.

As shown in Figure 28, the inner liner 36 has an annular supporting rib 362 extending towards the baking assembly 40. The one among the first bending section and the second bending section that bends away from the venting assembly 54 is the abutting section 207, which abuts against the annular supporting rib 362 in the radial direction of the abutting cylinder 361, so as to prevent incorrect positioning of the sealing structure 130. By providing the annular supporting rib 362, the sealing structure 130 is not susceptible to swaying after being mounted in place, thereby improving the reliability of the sealing of the sealing structure 130.

In a specific embodiment not shown in the figures, the bottom part of the annular sealing rib has a slot 210. The inner liner 36 has a sealing element 220 that extends into the slot 201 and is interference fitted with it. At least a part of the abutting cylinder 361 is used as the sealing element 220. The top of the abutting cylinder 361 extends into the slot 210. The technical effect of having the annular sealing rib inserted into the slot 210 is similar to that of providing a slot 210 on the top of the abutting cylinder 361, and is not described again here.

As shown in Figure 29, the thickness of the annular sealing rib decreases towards the inner cover 50 and has a main section 221 and a thinned section 222. The main section 221 is interference fitted with the slot 210. The thinned section 222 abuts against a bottom face of the slot 210 and is interference fitted with it, so that the annular sealing rib is sealed with the abutting cylinder 361. This disposition can achieve multiple sealings between the slot 210 and the sealing ring rib, thereby greatly improving the sealing between the inner liner 36 and the outer cover 35. By providing the thinned section 222, the inserting of the annular sealing rib into the slot 201 is facilitated. The main section 221 is interference fitted with the surface of the slot 210 close to the venting assembly 54, forming a first sealing. The thinned section 222 is interference fitted with the bottom face of the slot 210, forming a second sealing. The main body 221 is interference fitted with the surface of the slot 210 away from the venting assembly 54, forming a third sealing.

Specifically, the thickness A of the main body 221 is larger than the width B of the slot 210, and the difference between the thickness A and the width B is larger than 0.02 mm and smaller or equal to 0.15 mm. While ensuring a good sealing effect between the main section 221 and the slot 210, this disposition also facilitates the insertion of the main section 221 into the slot 210. Thus, the annular sealing rib can be interference fitted with the bottom face of the slot 210.

Specifically, the extent of interference fit between the thinned section 222 and the bottom face of the slot 210 is larger than or equal to 0.02 mm and smaller than or equal to 0.2 mm. This disposition, while ensuring the sealing between the thinned section 222 and the slot 210, will not exert a too big force on the slot 210, thereby preventing the thinned section 222 from breaking due to excessive force exerted, and improving the reliability of the fitting between the thinned section 222 and the slot 210.

As shown in Figure 28, the top of the abutting cylinder 361 comprises a supporting section 363 extending transversally towards the center of the abutting cylinder 361 and a plurality of annular protruding ribs 364 that are concentric but have different radius. The annular protruding ribs 364 extend towards the outer cover 35 from the upper surface of the supporting section 363. The slot 210 is formed by the gap between two adjacent annular protruding ribs 364. This disposition can improve the sealing between the inner liner 36 and the outer cover 35, reducing air entering between the inner liner 36 and the outer cover 35. By providing the supporting section 363 and the plurality of annular protruding ribs 364 that are concentric with different radius, the thickness of the abutting cylinder 361 can be reduced, thus reducing the weight of the inner liner 36, so that the cooking device is thinner and lighter.

As shown in Figure 29, the annular sealing ribs is offset from the boundary of the venting hole 351, so as to reserve an abutting face 353 for the abutting cylinder 361. At least a part of the top of the abutting cylinder 361 is in contact with the abutting face 353. This disposition can further improve the sealing between the annular sealing rib and the abutting cylinder 361, so as to further reduce air entering between the inner liner 36 and the outer cover 35, and greatly improve the reliability of the environment of the structural elements located between the inner liner 36 and the outer cover 35.

As shown in Figure 27, the cover 10 further comprises the baking assembly 40 and the sealing structure 130. The venting assembly 54 passes through the baking assembly 40 and extends into the abutting cylinder 361. The sealing structure 130 is sleeved to the venting assembly 54 and located between the baking assembly 40 and the inner liner 36, so as to seal the gap between the baking assembly 40 and the venting assembly 54. In this embodiment, the sealing structure 130 is arranged between the baking assembly 40 and the inner liner 36 and pressed against them so as to seal the gap between the baking assembly 40 and the inner liner 36 at the same time. Therefore, air is prevented from flowing back between the inner liner 36 and the baking assembly 40, so as to reduce the effect of humid air on electrical parts on the baking assembly 40, and improve the reliability of the functioning of the baking assembly 40. With the sealing structure 130 sleeved to the venting assembly 54 and abutting against the baking assembly 40, air is prevented from entering inside the baking assembly 40 via the gap between the venting assembly 54 and the baking assembly 40. The sealing structure 130 allows to seal the gaps between multiple parts at multiple locations at the same time, without the need of other sealing structure separately provided at each gap, thereby greatly improving the efficiency of the sealing structure 130 and saving labor costs.

As shown in Figure 27, the baking assembly 40 comprises the first reflecting shell 441 and the second reflecting shell 442 that are connected with each other. The second reflecting shell 442 is located below the first reflecting shell 441. The first reflecting shell 441 has a first passing hole 446 for the venting assembly 54 to pass through. The first reflecting shell 441 has a first sealing ring rib 447 which extends downwards from the circumference of the first passing hole 446 and abuts against the second reflecting shell 442, so as to achieve a sealing there between. By providing the first reflecting shell 441 with the first sealing ring rib 447, the gap between the first reflecting shell 441 and the second reflecting shell 442 can be sealed, thereby preventing air from entering between the first reflecting shell 441 and the second reflecting shell 442. It should be noted that, the first reflecting shell 441 and the second reflecting shell 442 are spaced apart from each other, so that a heat barrier is formed between the two, and the first sealing ring rib 447 only seals the gap between the first reflecting shell 441 and the second reflecting shell 442 at the first passing hole 446.

In another specific embodiment not shown in the figures, the second reflecting shell 442 has a second passing hole 448 for the venting assembly 54 to pass through. The second reflecting shell 442 has a second sealing ring rib 449. The second sealing ring rib 449 extends upwards from the circumference the second passing hole 448 and abuts against the first reflecting shell 441, so as to achieve a sealing there between. The effect of the second sealing ring rib 449 is similar to that of the first sealing ring rib 447, and is not described again here.

As shown in Figure 28, the baking assembly 40 comprises the first reflecting shell 441 and the second reflecting shell 442 that are connected with each other. The first reflecting shell 441 has the first passing hole 446 for the venting assembly 54 to pass through. The first reflecting shell 441 has the first sealing ring rib 447. The first sealing ring rib 447 extends downwards from the circumference of the first passing hole 446 and abuts against the second reflecting shell 442, so as to achieve a sealing there between. The second reflecting shell 442 has the second passing hole 448 for the venting assembly 54 to pass through. The second reflecting shell 442 has the second annular sealing rib which downwards from the circumference of the second passing hole 448. Since the second annular sealing rib downwardly provided, the gap between the second reflecting shell 442 and a baking face of the baking assembly 40 can also be sealed, preventing high temperature air inside the baking assembly 40 from escaping, so as to reduce leaking and improve the efficiency and reliability of the baking assembly 40.

As shown in Figure 28, the inner liner 36 has the annular supporting rib 362 extending towards the baking assembly 40. The one among the first bending section and the second bending section that bends towards the venting assembly 54 is the abutting section 207, which abuts against the annular supporting rib 362 in the radial direction of the abutting cylinder 361, so as to prevent incorrect positioning of the sealing structure 130. By providing the annular supporting rib 362, the sealing structure 130 is not susceptible to swaying after being mounted in place, thereby improving the reliability of the sealing structure 130.

### Tenth Embodiment

This embodiment differs from the first embodiment in that, in this embodiment, a heat barrier gap is formed between the sealing structure 130 and a bottom part of the venting assembly 54, and the sealing structure 130 has separate parts.

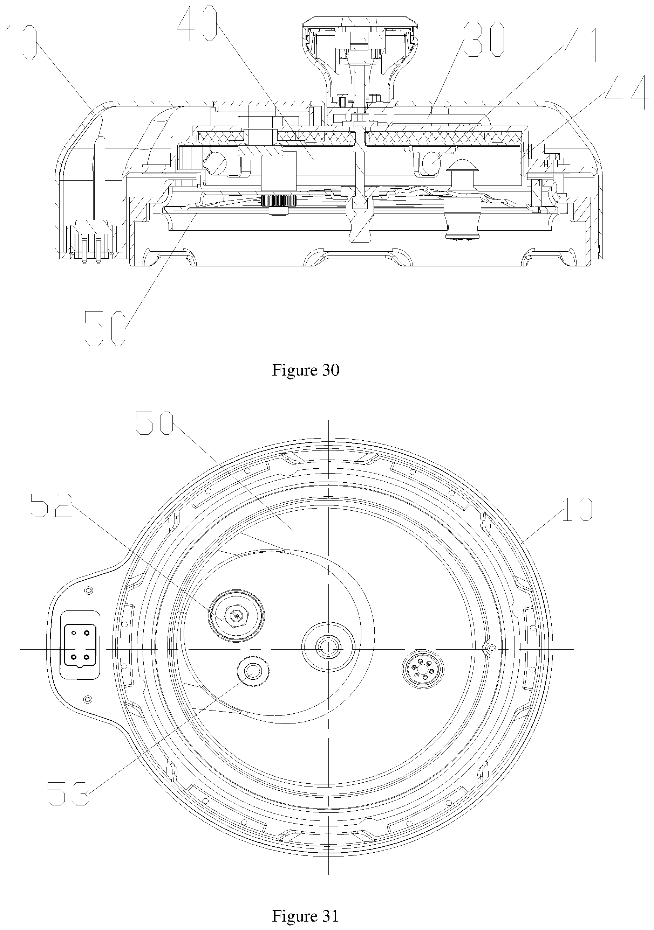

As shown in Figure 30 to Figure 50, a pressure limiting valve seat 52 is provided on the upper surface of the inner cover 50. The inner cover 50 further comprises a pressure limiting sealing ring 100. A first heat barrier gap is formed between the lower boundary of the pressure limiting sealing ring 100 and the bottom of the pressure limiting valve seat 52.

Since the pressuring limiting sealing ring 100 is provided on the pressure limiting valve seat 52 and is detachable together with the inner cover 50, other structural elements will not affect the pressure limiting sealing ring 100, which is thus prevented from melting and deforming due to high temperature baking. Thus, the service life of the pressure limiting sealing ring 100 is lengthened. A first heat barrier gap is formed between the lower boundary of the pressure limiting sealing ring 100 and the bottom of the pressure limiting valve 52, so as to reduce the transmission of heat below the inner cover 50 to the pressure limiting sealing ring 100, thus lengthening the service life of the pressure limiting sealing ring 100.

Specifically, the first heat barrier gap is larger than 10 mm. This disposition can reduce the transmission of heat in the lower part of the inner cover 50 to the pressure limiting sealing ring 100, and lengthen the service life of the pressure limiting sealing ring 100.

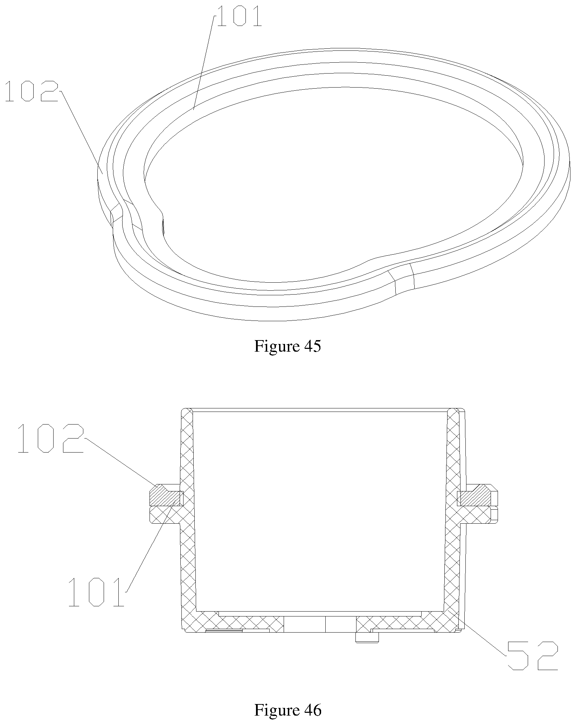

As shown in Figure 46, the pressure limiting sealing ring 100 is provided in a middle portion of the pressure limiting valve seat 52, or the distance between the pressure limiting sealing ring 100 and the top of the pressure limiting valve seat 52 is smaller than the distance between the pressure limiting sealing ring 100 and the bottom of the pressure limiting valve seat 52. Therefore, a first heat barrier gap is formed between the pressure limiting sealing ring 100 and the bottom of the pressure limiting valve seat 52, and the sealing of the hole to be sealed by the pressure limiting sealing ring 100 is facilitated.

As shown in Figure 45, the pressure limiting sealing ring 100 comprises a ring body 101 and a position limiting rib 102 protruding from an outer periphery of the ring body 101 towards the cover body 30. An inner ring face and an outer ring face of the position limiting rib 102 extend upwards from the ring body 101 and are inclined towards each other. The inner circumference of the ring body 101 is closer to the center of the pressure limiting sealing ring 100 compared to the inner circumference of the position limiting rib 102. At least a part of the ring body 101 is inserted in the pressure limiting valve seat 52, and abuts against the pressure limiting valve seat 52, so as to prevent the pressure limiting sealing ring 100 from dropping off, improving the reliability of the sealing of the pressure limiting sealing ring 100. By providing the position limiting rib 102, the mounting of the pressure sealing ring 100 is facilitated and made more convenient. In addition, the position limiting rib 102 will abut against other structural elements, reducing the collision of other structural elements on the pressure limiting valve seat 52, and improving the safety of the pressure limiting valve seat 52. With the inner ring face of the position limiting rib 102 and the outer ring face of the position limiting rib 102 inclined upwards and towards each other, the mounting and dismounting of the pressure limiting sealing ring 100 is facilitated. On the side facing the inner cover 50, the surface of the pressure limiting sealing ring 100 is a flat face, and is pressed against at least a part of the pressure limiting valve seat, thereby improving the reliability of the sealing between the pressure limiting sealing ring 100 and the pressure limiting valve seat 52.

As shown in Figure 46, the pressure limiting valve seat 52 is provided with a mounting slot inside which the pressure limiting sealing ring 100 is clamped. This disposition can improve the tightness of the connection between the pressure limiting sealing ring 100 and the pressure limiting valve seat 52, so that the pressure limiting sealing ring 100 can be detached together with the inner cover 50.

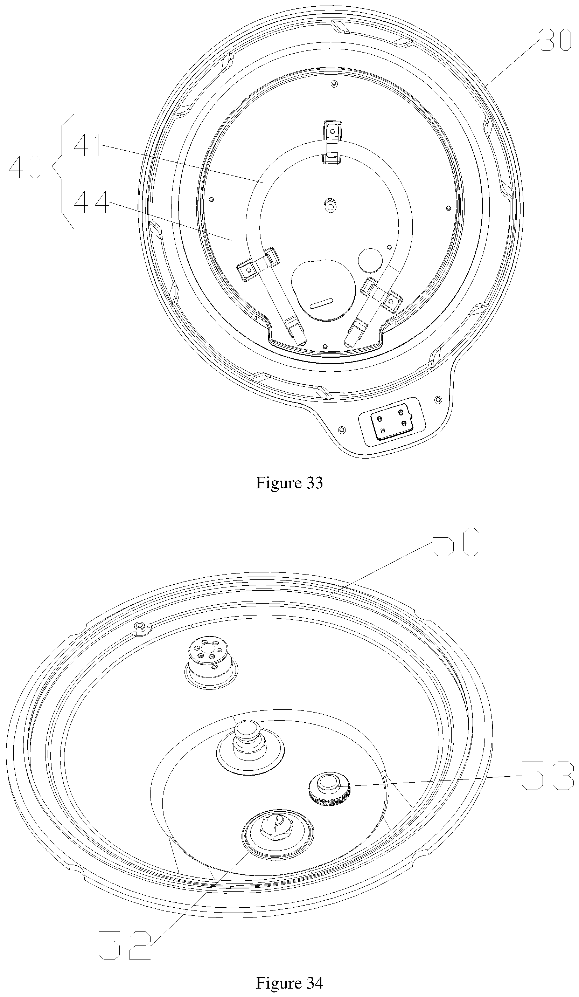

As shown in Figure 34, Figure 37, and Figure 38, an opening disabling valve seat 53 is arranged on the upper surface of the inner cover 50. The inner cover 50 further comprises an opening disabling sealing ring 110. The opening disabling sealing ring 110 is provided on the opening disabling valve seat 53, and a second heat barrier gap is formed between the lower boundary of the opening disabling sealing ring 110 and the bottom end of the opening disabling valve seat 53. The opening disabling sealing ring 110 is provided on the opening disabling valve seat 53 and can be detached together with the inner cover 50. This arrangement can prevent other structural elements from affecting the opening disabling sealing ring 110, thereby preventing the opening disabling sealing ring 110 from melting and deforming due to high temperature baking, and lengthening the service life of the opening disabling sealing ring 110. The second heat barrier gap is formed between the lower boundary of the opening disabling sealing ring 110 and the bottom of the opening disabling valve seat 53, so as to reduce the transmission of heat below the inner cover 50 to the opening disabling sealing ring 110, thus lengthening the service life of the opening disabling sealing ring 110.

Specifically, the second heat barrier gap is larger than 10 mm. This disposition can reduce the transmission of heat of the lower part of the inner cover 50 to the opening disabling sealing ring 110, and lengthen the service life of the opening disabling sealing ring 110.

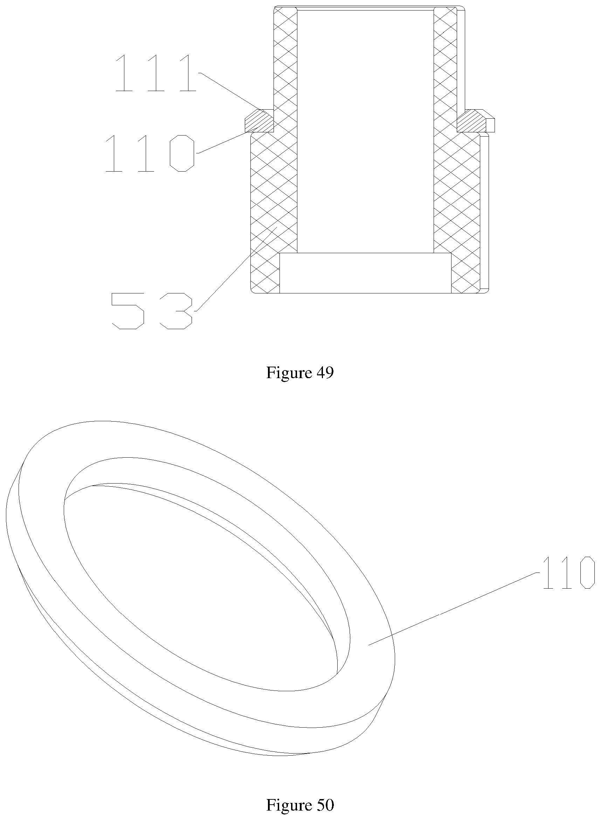

As shown in Figure 49, the distance between the opening disabling sealing ring 110 and the top of the opening disabling valve seat 53 is smaller than the distance between the opening disabling sealing ring 110 and the bottom of the opening disabling valve seat 53; or the opening disabling sealing ring 110 may be provided at a top portion of the opening disabling valve seat 53. In other words, the opening disabling sealing ring 110 is located in the middle upper part of the opening disabling valve seat 53 or at the top of the opening disabling valve seat 53. Therefore, the second heat barrier gap is formed between the opening disabling sealing ring 110 and the bottom of the opening disabling valve seat 53, and the sealing of the hole to be sealed by the opening disabling sealing ring 110 is facilitated.

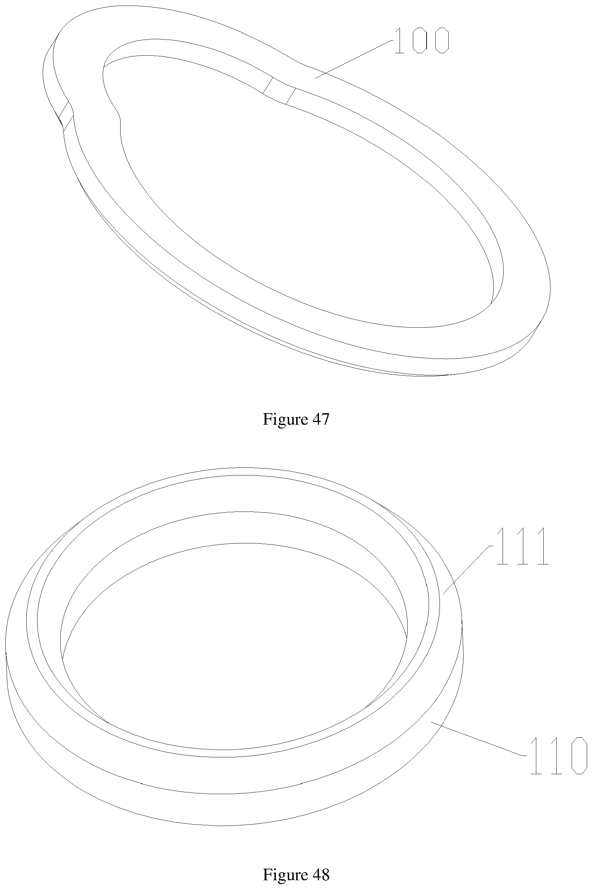

As shown in Figure 48, the opening disabling sealing ring 110 has a narrowed section 111. By providing the narrowed section 111, the mounting of the opening disabling sealing ring 110 is made more convenient. On the side facing the inner cover 50, the surface of the opening disabling sealing ring 110 is a flat face, and is pressed against at least a part of the opening disabling valve seat 53, thereby reducing the risk of the opening disabling sealing ring 110 being detached from the opening disabling valve seat 53.

In this embodiment, the opening disabling sealing ring 110 and the pressure limiting sealing ring 100 are separate parts. Thus, the interaction between the two is relatively limited, but the assembly is more complicated and it is not easy to position both in place at the same time.

Of course, the opening disabling sealing ring 110 and the pressure limiting sealing ring 100 can be integrally formed (not shown in the figures), so as to reduce the number of steps for mounting the opening disabling sealing ring 110 and the pressure limiting sealing ring 100.

As shown in Figure 30 to Figure 50, the cooking device comprises a cover 10 and a body on which the cover 10 is arranged and capable of opening and closing the body. The cover 10 comprises a cover body 30, a baking assembly 40, and the above-described inner cover 50. The cover body 30 is provided with a fan inside. The baking assembly 40 is arranged inside the cover body 30. The inner cover 50 is detachably arranged below the baking assembly 40.

By providing both the baking assembly 40 and the inner cover 50 in the cooking device, the cooking device can perform cooking by both baking and high-pressure cooking. As the inner cover 50 is detachably arranged below the baking assembly 40, when the cooking device is needed to perform cooking by baking, the inner cover 50 is detached, so that the baking assembly 40 performs baking of food materials inside the device body. When the cooking device is needed to perform high-pressure cooking, the inner cover 50 is mounted below the baking assembly 40, so that the inner cover 50 can seal the high pressure air inside the device body and pressure cooking of food materials can be performed inside the device body. The pressure limiting valve seat 52 provides a mounting position for the pressure limiting valve 120. The pressure limiting sealing ring 100 is provided on the pressure limiting valve seat 52 and can be detached together with the inner cover 50, preventing the pressure limiting sealing ring 100 from being heated by the baking assembly 40 and further melted and deformed due to high temperature baking, and thus lengthening the service life of the pressure limiting sealing ring 100. A first heat barrier gap is formed between the lower boundary of the pressure sealing ring 100 and the bottom of the pressure limiting valve seat 52, so as to reduce the transmission of heat inside the device body to the pressure limiting sealing ring 100, thus lengthening the service life of the pressure limiting sealing ring 100. The fan inside the cover body 30 can blow away heat transmitted to the cover body 30, so as to reduce the temperature at the cover body 30, improving the reliability of parts inside the cover body 30.

It should be noted that, in the application, the cover body 30 is provided with a first plug terminal 31, and the device body is provided with a second plug terminal that cooperates with the first plug terminal 31. The first plug terminal 31 and the second plug terminal are plugged together to power the cover 10. This coupling power supply approach is more reliable in supplying power.

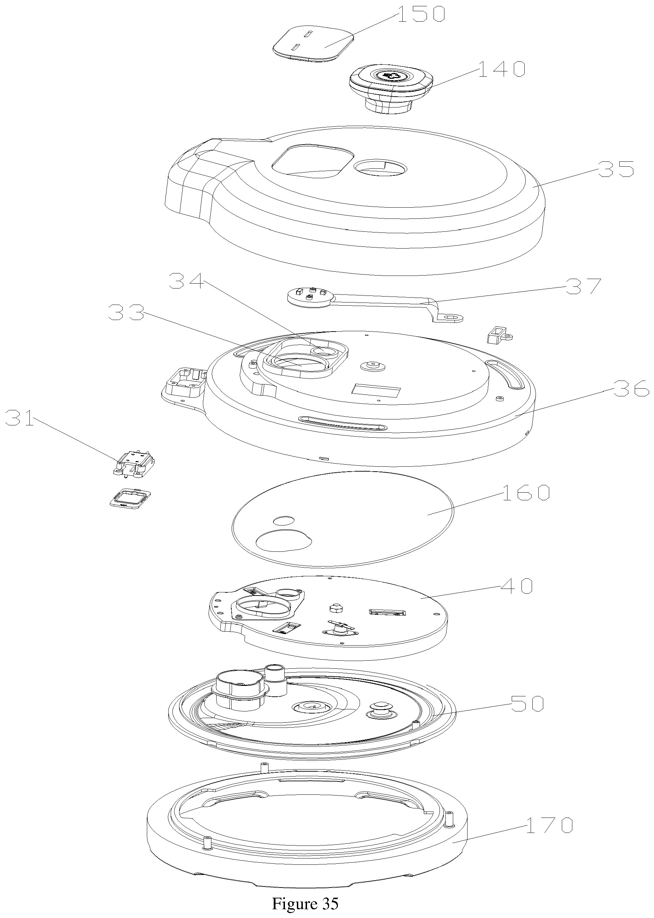

As shown in Figure 35, the pressure limiting sealing ring 100 of the inner cover 50 is tight fitted with the mounting hole 33 of the pressure limiting valve on the cover body 30. The opening disabling sealing ring 110 of the inner cover 50 is tight fitted with the mounting hole 34 of the opening disabling valve on the cover body 30. The pressure limiting sealing ring 100 passes through the baking assembly 40, so as to seal the mounting hole 33 of the pressure limiting valve on the cover body 30. The opening disabling sealing ring 110 passes through the baking assembly 40, so as to seal the mounting hole 34 of the opening disabling valve on the cover body 30.

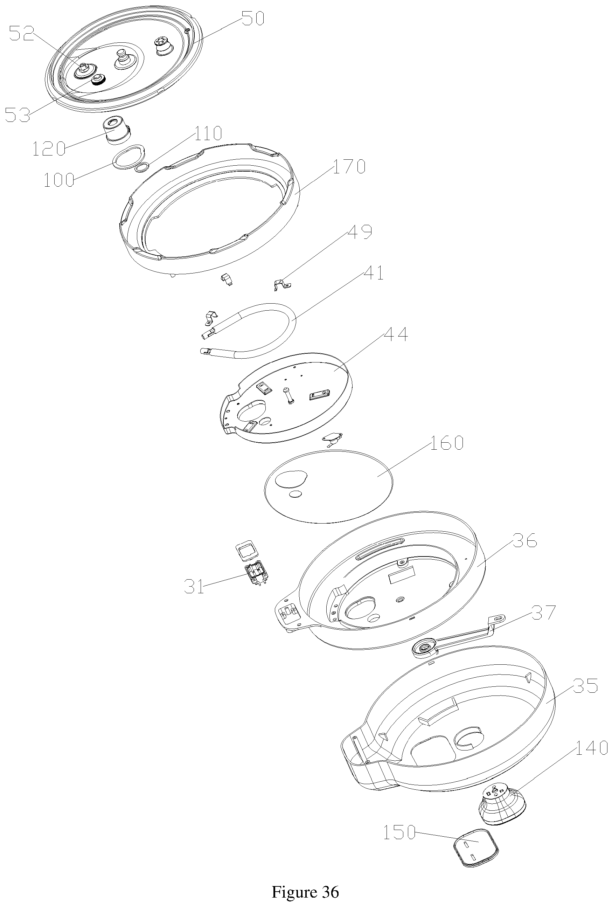

As shown in Figure 35 and Figure 36, the baking assembly 40 comprises, sequentially from top to bottom, the heat shield 44, the heating element 41, and a plurality of fixing clamps 49 by means of which the heating element 41 is mounted to the heat shield 44 and through which the pressure limiting valve seat 52 of the inner cover 50 passes. The heating element 41 allows the pressure limiting valve seat 52 to bypass it. The heat shield 44 has a passing hole 445 for the pressure limiting valve seat 52 to pass through. The baking assembly 40 performs baking of food materials inside the device body by the heat generated by the heating element 41. The heat shield 44 blocks the heat produced by the baking assembly 40, so as to prevent heat from being transmitted into the cover body 30. With the passing hole 445 for pressure limiting valve seat, the pressure limiting valve seat 52 can pass through the heat shield 44 and extend into the cover body 30. The plurality of fixing clamps 49 fix the heating element 41 at a plurality of positions, improving the reliability of the connection between the heating element 41 and the heat shield 44.

In a specific embodiment not illustrated in the figures, a protective net is arranged in the baking assembly 40 by means of which the heating element 41 is connected to the heat shield 44, instead of fixing clamps. The area of contact between the protective net and the heating element 41 is large, so that the connection between the heating element 41 and the heat shield 44 is tighter.

In the specific embodiment shown in Figure 35 and Figure 36, the cover 10 further comprises a handle 140 and a steam cover 150 that are connected with the outer cover 35 on the cover body 30. At least a part of the handle 140 is connected with a rotary bar 37 on the inner liner 36, so as to drive a rotary cover 170 to rotate, thereby opening or closing the cover 10 over the device body. The steam cover 150 is spaced apart from the handle 140 and covers the pressure limiting valve 120, so as to prevent the pressure limiting valve 120 from being detached from the pressure limiting valve seat 52.

In the application, the cover body 30 further comprises a heat insulating cotton 160 located between the inner liner 36 and the heat shield 44, so as to reduce the transmission of heat from the baking assembly 40 to the inner liner 36, thus improving the reliability of the cover body 30.

In this embodiment, the inner cover 50 can seal the high pressure air inside the device body, so as to perform pressure cooking of food materials inside the device body.

Optionally, the above-described cooking device is an electrical pressure cooker. Of course, the cooking device can also be other electrical appliances used for cooking food materials, such as an electrical rice cooker.

It should be noted that, the terms used herein are merely for describing specific modes of realization, and not intended to limit exemplary embodiments according to the application. As used herein, unless otherwise specifically indicated elsewhere herein, the singular form is intended to also include the plural form. In addition, it should be noted that, when a term such as "comprise" and/or "include" is used in this specification, it indicates there exists a feature, step, functioning, part, assembly, and/or their combination.

It should be noted that, the terms such as "first" and "second" are used to distinguish similar objects, and not necessarily to describe a particular order or sequence. It should be understood that information used in this way can be exchangeable in appropriate circumstances, so that the embodiments of the application described herein can be realized in an order other than illustrated or described herein.

## Claims

1. A cooking device, wherein it comprises a cover (10) and a body on which the cover (10) is arranged to open and close the body, the body comprising a heating structure, the cover (10) comprising:
- a cover body (30) provided with a venting passage;
- a baking assembly (40) arranged inside the cover body (30) and comprising a heat shield (44) and a heating element (41) arranged below the heat shield (44),
**characterized in that**
- an inner cover (50) is detachably provided below the baking assembly (40) and provided with a venting assembly (54) extending towards the cover body (30), a sealing structure (130) being provided between the venting assembly (54) and the venting passage.

2. The cooking device of claim 1, **characterized in that**, the baking assembly (40) is provided with a through hole (444) that is in communication with the venting passage and through which the venting assembly passes, the sealing structure (130) seals the gap between the cover body (30) and the baking assembly (40).

3. The cooking device of claim 2, **characterized in that**, the sealing structure (130) is clamped between the cover body (30) and the baking assembly (40), the venting assembly (54) passes through the sealing structure (130) and is tight fitted with the sealing structure (130).

4. The cooking device of claim 2 or claim 3, **characterized in that**, the cover body (30) comprises an outer cover (35) and an inner liner (36) arranged below the outer cover (35), the sealing structure (130) seals the gap between the baking assembly (40) and the inner liner (36).

5. The cooking device of any one of claims 1 to 4, **characterized in that**, the venting assembly (54) is provided with a mounting slot inside which at least a part of the sealing structure (130) is clamped, the sealing structure (130) is detachable together with the inner cover (50).

6. The cooking device of any one of claims 1 to 5, **characterized in that**, the venting assembly (54) comprises a pressure limiting valve seat (52) and an opening disabling valve seat (53), the sealing structure (130) is an integral component or comprises two separate sealing rings for each of the valve seats.

7. The cooking device of any one of claims 2 to 6, **characterized in that**, the sealing structure (130) has a body section (201) that is clamped between the cover body (30) and the baking assembly (40), and a sealing section (202) extending from an inner periphery of the body section (201) and tight fitted with the venting assembly (54).

8. The cooking device of claim 7, **characterized in that**, the sealing structure (130) further has a first bending section located on top of the body section (201) and a second bending section located at the bottom of the body section (201), the bending direction of the first bending section is opposite to that of the second bending section, the upper surface of the first bending section abuts against the lower surface of the cover body (30), and the lower surface of the second bending section abuts against the upper surface of the baking assembly (40), the one among the first bending section and the second bending section that bends towards the venting assembly (54) is the sealing section (202), which is interference fitted with the venting assembly (54), so as to prevent steam from entering the space between the cover body (30) and the baking assembly (40).

9. The cooking device of claim 7, **characterized in that**, the venting assembly (54) is provided with a mounting flange (541), and the sealing section (202) is provided with an overlapping flange (204) extending towards the venting assembly (54) that overlaps with the mounting flange (541) and is interference fitted with the venting assembly (54).

10. The cooking device of any one of claims 1 to 6, **characterized in that**, the heat shield (44) comprises a plurality of reflecting shells that are sequentially stacked, and the sealing structure (130) sealing the gaps between the plurality of reflecting shells, the sealing structure (130) having a cooperating section (1321) extending downward from a body part (132) of the sealing structure (130) so as to seal the gap between two adjacent reflecting shells, the cooperating section (1321) having a clamping section (1322) extending away from the venting assembly (54), at least one reflecting shell extends into a slot formed between the clamping section (1322) and the body part (132), the clamping section (1322) extending into the gap between two adjacent reflecting shells and pressed against the reflecting shells, so as to seal the gap between two adjacent reflecting shells.

11. The cooking device of any one of claims 1 to 6, **characterized in that**, the sealing structure (130) has a body part (132) comprising an extension hole (133) for pressure limiting valve seat and an extension hole (134) for opening disabling valve seat, the pressure limiting valve seat (52) on the inner cover (50) passes through the extension hole (133) for pressure limiting valve seat to be connected with a pressure limiting valve (120), the opening disabling valve seat (53) on the inner cover (50) passes through the extension hole (134) for opening disabling valve seat to be connected with an opening disabling valve (190).

12. The cooking device of claim 11, **characterized in that**, the sealing structure (130) also comprises a plurality of position limiting feet (131) extending from the body part (132) towards the cover body (30) and cooperating with the cover body (30) in a position limiting manner, the position limiting feet (131) being arranged along the circumference of the sealing structure (130).

13. The cooking device of claim 4, **characterized in that**, the inner liner (36) comprises an abutting cylinder (361) extending towards the outer cover (35) and tight fitted with an abutting rib (352) arranged on the outer cover (35), so as to seal the gap between the outer cover (35) and the inner liner (361).

14. The cooking device of claim 13, **characterized in that**, the abutting rib (352) also cooperates sealingly with the sealing structure (130).

15. The cooking device of claim 1, **characterized in that**, the heat shield (44) or the cover body (30) has a sealing cylinder (230), so as to seal the gap between the cover body (30) and the baking assembly (40).

## Patentansprüche

1. Kochvorrichtung, wobei sie eine Abdeckung (10) und einen Körper aufweist, auf dem die Abdeckung (10) angeordnet ist, um den Körper zu öffnen und zu schließen, wobei der Körper eine Heizstruktur aufweist, wobei die Abdeckung (10) aufweist:
- einen Abdeckkörper (30), der mit einem Entlüftungsdurchgang versehen ist;
- eine Backbaugruppe (40), die innerhalb des Abdeckkörpers (30) angeordnet ist und einen Hitzeschild (44) und ein Heizelement (41) aufweist, das unter dem Hitzeschild (44) angeordnet ist, **dadurch gekennzeichnet, dass**
- eine innere Abdeckung (50) abnehmbar unter der Backbaugruppe (40) vorgesehen ist und mit einer Entlüftungsbaugruppe (54) versehen ist, die sich zum Abdeckkörper (30) hin erstreckt, wobei eine Dichtungsstruktur (130) zwischen der Entlüftungsbaugruppe (54) und dem Entlüftungsdurchgang vorgesehen ist.

2. Kochvorrichtung nach Anspruch 1, **dadurch gekennzeichnet, dass** die Backbaugruppe (40) mit einem Durchgangsloch (444) versehen ist, das mit dem Entlüftungsdurchgang in Verbindung steht und durch das die Entlüftungsbaugruppe hindurchgeht, wobei die Dichtungsstruktur (130) den Spalt zwischen dem Abdeckkörper (30) und der Backbaugruppe (40) abdichtet.

3. Kochvorrichtung nach Anspruch 2, **dadurch gekennzeichnet, dass** die Dichtungsstruktur (130) zwischen dem Abdeckkörper (30) und der Backbaugruppe (40) eingeklemmt ist, die Entlüftungsbaugruppe (54) durch die Dichtungsstruktur (130) hindurchgeht und dicht mit der Dichtungsstruktur (130) verbunden ist.

4. Kochvorrichtung nach Anspruch 2 oder 3, **dadurch gekennzeichnet, dass** der Abdeckkörper (30) eine äußere Abdeckung (35) und eine unterhalb der äußeren Abdeckung (35) angeordnete innere Auskleidung (36) aufweist, wobei die Dichtungsstruktur (130) den Spalt zwischen der Backbaugruppe (40) und der inneren Auskleidung (36) abdichtet.

5. Kochgerät nach einem der Ansprüche 1 bis 4, **dadurch gekennzeichnet, dass** die Entlüftungsbaugruppe (54) mit einem Montageschlitz versehen ist, in den zumindest ein Teil der Dichtungsstruktur (130) eingeklemmt ist, wobei die Dichtungsstruktur (130) zusammen mit der inneren Abdeckung (50) abnehmbar ist.

6. Kochgerät nach einem der Ansprüche 1 bis 5, **dadurch gekennzeichnet, dass** die Entlüftungsbaugruppe (54) einen druckbegrenzenden Ventilsitz (52) und einen öffnungssperrenden Ventilsitz (53) aufweist, wobei die Dichtungsstruktur (130) ein integraler Bestandteil ist oder zwei separate Dichtungsringe für jeden der Ventilsitze aufweist.

7. Kochvorrichtung nach einem der Ansprüche 2 bis 6, **dadurch gekennzeichnet, dass** die Dichtungsstruktur (130) einen Körperabschnitt (201), der zwischen dem Abdeckkörper (30) und der Backbaugruppe (40) eingeklemmt ist, und einen Dichtungsabschnitt (202) aufweist, der sich von einem Innenumfang des Körperabschnitts (201) aus erstreckt und dicht mit der Entlüftungsbaugruppe (54) verbunden ist.

8. Kochvorrichtung nach Anspruch 7, **dadurch gekennzeichnet, dass** die Dichtungsstruktur (130) ferner einen ersten Biegeabschnitt aufweist, der sich an der Oberseite des Körperabschnitts (201) befindet, und einen zweiten Biegeabschnitt, der sich an der Unterseite des Körperabschnitts (201) befindet, wobei die Biegerichtung des ersten Biegeabschnitts derjenigen des zweiten Biegeabschnitts entgegengesetzt ist, die obere Fläche des ersten Biegeabschnitts an der unteren Fläche des Abdeckkörpers (30) anliegt die obere Fläche des ersten Biegeabschnitts an der unteren Fläche des Abdeckkörpers (30) anliegt und die untere Fläche des zweiten Biegeabschnitts an der oberen Fläche der Backbaugruppe (40) anliegt, wobei derjenige von dem ersten Biegeabschnitt und dem zweiten Biegeabschnitt, der sich in Richtung der Entlüftungsbaugruppe (54) biegt, der Dichtungsabschnitt (202) ist, der mit der Entlüftungsbaugruppe (54) im Eingriff ist, um zu verhindern, dass Dampf in den Raum zwischen dem Abdeckkörper (30) und der Backbaugruppe (40) eintritt.

9. Kochgerät nach Anspruch 7, **dadurch gekennzeichnet, dass** die Entlüftungsbaugruppe (54) mit einem Montageflansch (541) versehen ist und der Dichtungsabschnitt (202) mit einem sich zur Entlüftungsbaugruppe (54) hin erstreckenden Überlappungsflansch (204) versehen ist, der sich mit dem Montageflansch (541) überlappt und mit der Entlüftungsbaugruppe (54) im Presssitz verbunden ist.

10. Kochvorrichtung nach einem der Ansprüche 1 bis 6, **dadurch gekennzeichnet, dass** der Hitzeschild (44) mehrere reflektierende Schalen aufweist, die aufeinander gestapelt sind, und die Dichtungsstruktur (130) die Lücken zwischen den mehreren reflektierenden Schalen abdichtet, wobei die Dichtungsstruktur (130) einen zusammenwirkenden Abschnitt (1321) aufweist, der sich von einem Körperteil (132) der Dichtungsstruktur (130) nach unten erstreckt, um die Lücke zwischen zwei benachbarten reflektierenden Schalen abzudichten, wobei der zusammenwirkende Abschnitt (1321) einen Klemmabschnitt (1322) aufweist, der sich von der Entlüftungsbaugruppe (54) weg erstreckt, wobei sich mindestens eine reflektierende Schale in einen Schlitz erstreckt, der zwischen dem Klemmabschnitt (1322) und dem Körperteil (132) ausgebildet ist, wobei sich der Klemmabschnitt (1322) in den Spalt zwischen zwei benachbarten reflektierenden Schalen erstreckt und gegen die reflektierenden Schalen gedrückt wird, um den Spalt zwischen zwei benachbarten reflektierenden Schalen abzudichten.

11. Kochvorrichtung nach einem der Ansprüche 1 bis 6, **dadurch gekennzeichnet, dass** die Dichtungsstruktur (130) einen Körperteil (132) aufweist, der ein Erweiterungsloch (133) für einen Druckbegrenzungsventilsitz und ein Erweiterungsloch (134) für einen Öffnungssperrventilsitz aufweist, der Druckbegrenzungsventilsitz (52) an der inneren Abdeckung (50) durch das Verlängerungsloch (133) für den Druckbegrenzungsventilsitz hindurchgeht, um mit einem Druckbegrenzungsventil (120) verbunden zu werden, der Öffnungssperrventilsitz (53) an der inneren Abdeckung (50) durch das Verlängerungsloch (134) für den Öffnungssperrventilsitz hindurchgeht, um mit einem Öffnungssperrventil (190) verbunden zu werden.

12. Kochvorrichtung nach Anspruch 11, **dadurch gekennzeichnet, dass** die Dichtungsstruktur (130) auch eine Vielzahl von positionsbegrenzenden Füßen (131) aufweist, die sich von dem Körperteil (132) in Richtung des Abdeckkörpers (30) erstrecken und mit dem Abdeckkörper (30) positionsbegrenzend zusammenwirken, wobei die positionsbegrenzenden Füße (131) entlang des Umfangs der Dichtungsstruktur (130) angeordnet sind.

13. Kochvorrichtung nach Anspruch 4, **dadurch gekennzeichnet, dass** die innere Auskleidung (36) einen Anschlagzylinder (361) aufweist, der sich in Richtung der äußeren Abdeckung (35) erstreckt und mit einer Anschlagrippe (352), die an der äußeren Abdeckung (35) angeordnet ist, dicht zusammenpasst, um den Spalt zwischen der äußeren Abdeckung (35) und der inneren Auskleidung (361) abzudichten.

14. Kochvorrichtung nach Anspruch 13, **dadurch gekennzeichnet, dass** die Anlagerippe (352) auch mit der Dichtungsstruktur (130) abdichtend zusammenwirkt.

15. Kochvorrichtung nach Anspruch 1, **dadurch gekennzeichnet, dass** der Hitzeschild (44) oder der Abdeckkörper (30) einen Dichtungszylinder (230) aufweist, um den Spalt zwischen dem Abdeckkörper (30) und der Backbaugruppe (40) abzudichten.

## Revendications

1. Un dispositif de cuisson, comprenant un couvercle (10) et un corps sur lequel le couvercle (10) est disposé pour ouvrir et fermer le corps, le corps comprenant une structure chauffante, le couvercle (10) comprenant :
- un corps de couvercle (30) présentant un passage de ventilation ;
- un ensemble de cuisson (40) agencé à l'intérieur du corps de couvercle (30) et comprenant un écran thermique (44) et un élément chauffant (41) agencé au-dessous de l'écran thermique (44),
**caractérisé en ce que**
- un couvercle interne (50) est disposé de manière amovible au-dessous de l'ensemble de cuisson (40) et est pourvu d'un ensemble de ventilation (54) s'étendant vers le corps de couvercle (30), une structure d'étanchéité (130) étant placée entre l'ensemble de ventilation (54) et le passage de ventilation.

2. Le dispositif de cuisson selon la revendication 1, **caractérisé en ce que** l'ensemble de cuisson (40) est pourvu d'un trou traversant (444) qui est en communication avec le passage de ventilation et à travers lequel passe l'ensemble de ventilation, la structure d'étanchéité (130) fermant de façon étanche l'espace situé entre le corps de couvercle (30) et l'ensemble de cuisson (40).

3. Le dispositif de cuisson selon la revendication 2, **caractérisé en ce que** la structure d'étanchéité (130) est serrée entre le corps de couvercle (30) et l'ensemble de cuisson (40), l'ensemble de ventilation (54) traversant la structure d'étanchéité (130) et étant étroitement ajusté à la structure d'étanchéité (130).

4. Le dispositif de cuisson selon la revendication 2 ou la revendication 3, **caractérisé en ce que** le corps de couvercle (30) comprend un couvercle externe (35) et une doublure interne (86) agencée au-dessous du couvercle externe (35), la structure d'étanchéité (130) fermant de façon étanche l'espace entre l'ensemble de cuisson (40) et la doublure interne (36).

5. Le dispositif de cuisson selon l'une quelconque des revendications 1 à 4, **caractérisé en ce que** l'ensemble de ventilation (54) présente une fente de montage à l'intérieur de laquelle au moins une partie de la structure d'étanchéité (130) est serrée, la structure d'étanchéité (130) étant détachable conjointement au couvercle interne (50).

6. Le dispositif de cuisson selon l'une quelconque des revendications 1 à 5, **caractérisé en ce que** l'ensemble de ventilation (54) comprend un siège (52) de soupape de limitation de pression et un siège (53) de soupape de désactivation d'ouverture, la structure d'étanchéité (130) étant un composant en une pièce ou comprenant deux bagues d'étanchéité séparées pour chacun des sièges de soupape.

7. Le dispositif de cuisson selon l'une quelconque des revendications 2 à 6, **caractérisé en ce que** la structure d'étanchéité (130) présente une partie formant corps (201) qui est serrée entre le corps de couvercle (30) et l'ensemble de cuisson (40), et une partie d'étanchéité (202) s'étendant depuis une périphérie interne de la partie formant corps (201) et ajustée étroitement avec l'ensemble de ventilation (54).

8. Le dispositif de cuisson selon la revendication 7, **caractérisé en ce que** la structure d'étanchéité (130) présente en outre une première section de courbure située au-dessus de la partie formant corps (201) et une deuxième section de courbure située au bas de la partie formant corps (201), la direction de courbure de la première section de courbure est opposée à celle de la deuxième section de courbure, la surface supérieure de la première section de courbure venant en butée contre la surface inférieure du corps de couvercle (30), et la surface inférieure de la deuxième section de courbure venant en butée contre la surface supérieure de l'ensemble de cuisson (40), celle parmi la première section de courbure et la deuxième section de courbure qui se courbe vers l'ensemble de ventilation (54) étant la partie d'étanchéité (202), qui est montée en interférence avec l'ensemble de ventilation (54), de manière à empêcher la vapeur de pénétrer dans l'espace situé entre le corps de couvercle (30) et l'ensemble de cuisson (40).

9. Le dispositif de cuisson selon la revendication 7, **caractérisé en ce que** l'ensemble de ventilation (54) est pourvu d'une bride de montage (541), et la partie d'étanchéité (202) est pourvue d'une bride de chevauchement (204) s'étendant vers l'ensemble de ventilation (54) qui chevauche la bride de montage (541) et est ajustée en interférence avec l'ensemble de ventilation (54).

10. Le dispositif de cuisson selon l'une quelconque des revendications 1 à 6, **caractérisé en ce que** le bouclier thermique (44) comprend une pluralité de coques réfléchissantes qui sont empilées séquentiellement, et la structure d'étanchéité (130) ferme de façon étanche les espaces situés entre la pluralité de coques réfléchissantes, la structure d'étanchéité (130) comportant une portion de coopération (1321) s'étendant vers le bas à partir d'une partie de corps (132) de la structure d'étanchéité (130) de manière à fermer de façon étanche l'espace situé entre deux coques réfléchissantes adjacentes, la portion de coopération (1321) comportant une portion de serrage (1322) s'étendant à l'opposé de l'ensemble de ventilation (54), au moins une coque réfléchissante s'étendant dans une fente formée entre la portion de serrage (1322) et la partie de corps (132), la portion de serrage (1322) s'étendant dans l'espace entre deux coques réfléchissantes adjacentes et étant pressée contre les coques réfléchissantes, de manière à fermer de façon étanche l'espace situé entre deux coques réfléchissantes adjacentes.

11. Le dispositif de cuisson selon l'une quelconque des revendications 1 à 6, **caractérisé en ce que** la structure d'étanchéité (130) présente une partie de corps (132) comprenant un trou d'extension (133) pour le siège de soupape de limitation de pression et un trou d'extension (134) pour le siège de soupape de désactivation d'ouverture, le siège (52) de soupape de limitation de pression sur le couvercle interne (50) traversant le trou d'extension (133) pour le siège de soupape de limitation de pression de façon à être connecté à une soupape (120) de limitation de pression, le siège (53) de soupape de désactivation d'ouverture sur le couvercle interne (50) traversant le trou d'extension (134) de façon que le siège de soupape de désactivation d'ouverture soit relié à une soupape (190) de désactivation d'ouverture.

12. Le dispositif de cuisson selon la revendication 11, **caractérisé en ce que** la structure d'étanchéité (130) comprend également une pluralité de pieds (131) de limitation de position s'étendant de la partie de corps (132) vers le corps de couvercle (30) et coopérant avec le corps de couvercle (30) d'une manière limitant la position, les pieds (131) de limitation de position étant agencés le long de la circonférence de la structure d'étanchéité (130).

13. Le dispositif de cuisson selon la revendication 4, **caractérisé en ce que** la doublure interne (36) comprend un cylindre de butée (361) s'étendant vers le couvercle externe (35) et ajusté de manière étanche avec une nervure de butée (852) agencée sur le couvercle externe (35), de manière à fermer de façon étanche l'espace situé entre le couvercle externe (35) et la doublure interne (361).

14. Le dispositif de cuisson selon la revendication 13, **caractérisé en ce que** la nervure de butée (352) coopère également de manière étanche avec la structure d'étanchéité (130).

15. Le dispositif de cuisson selon la revendication 1, **caractérisé en ce que** l'écran thermique (44) ou le corps de couvercle (30) présente un cylindre d'étanchéité (230), de manière à fermer de façon étanche l'espace situé entre le corps de couvercle (30) et l'ensemble de cuisson (40).
